# EUROPÄISCHE PATENTSCHRIFT

(11) **EP 1 411 008 B1**
(45) Veröffentlichungstag und Bekanntmachung des Hinweises auf die Patenterteilung: **02.11.2006**
(21) Anmeldenummer: 02020871.6
(22) Anmeldetag: 18.09.2002
(51) Int. Cl.: B65G 47/96, H02J 5/00

(54) **Verfahren zum Betätigen eines Kippschalen-Sorters, sowie Kipp-Förderelement zur Durchführung des vorgenannten Verfahrens**
Method of operating a tilt tray sorter and corresponding tiltable conveying element
Méthode pour commander un convoyeur de triage à plateaux basculants et élément de transport basculant correspondant

(43) Veröffentlichungstag der Anmeldung: 21.04.2004
(73) Patentinhaber: Beumer Maschinenfabrik GmbH & Co. KG, 59269 Beckum (DE)
(72) Erfinder: Heitplatz, Heino, Dipl.-Ing., 48324 Sendenhorst (DE)
(74) Vertreter: Hoormann, Walter R.

(56) Entgegenhaltungen:
- WO-A-00/23203
- WO-A-00/71446
- US-B1- 6 253 901

## Beschreibung

Die vorliegende Erfindung betrifft ein (Arbeits-)Verfahren zum wahlweisen einzelnen oder gruppenweisen Kippen der Kippschalen eines Kippschalen-Sorters nach dem Oberbegriff des Ansprüches 1 sowie ein Kipp-Förderelement nach dem Oberbegriff des Ansprüches 8.

Ein solches Verfahren bzw. Kipp-Förderelement ist aus WO 00/23203 bekannt.

Bei sog. Sortern handelt es sich fördertechnisch um Gliederförderer zum Sortieren von Stückgutteilen, wie z.B. Paketen in Postämtern, Gepäckstücken auf Flughäfen, Kommissionswaren und Versandhäusern u.dgl.

Derartige Sorter sind in unterschiedlichster Ausgestaltung bekannt. Das Basisprinzip besteht darin, daß Stückgutteile, die in ungeordneter Reihenfolge anfallen (wie dieses bspw. bei Gepäckstücken auf Flughäfen der Fall ist, welche - ggf. erst nach einem längeren Zeitraum - einem bestimmten Gate eines bestimmten Terminals zugefördert werden sollen), unter bestimmten Gesichtspunkten geordnet (sortiert) werden, indem die zu diesem Zwecke i.a. vor ihrer Aufgabe auf den Sorter kodierten Stückgutteile an wenigstens einer Aufgabestelle (ggf. von Hand, i.a. jedoch mittels einer geeigneten Aufgabevorrichtung) auf den Sorter aufgegeben und von diesem sodann der vorgegebenen Zielstelle (= Abgabestelle) zugefördert werden, an welcher sie in geeigneter Weise seitlich vom Sorter abgegeben werden.

Zu diesem Zweck werden die zu sortierenden Stückgutteile vor/bei ihrer Aufgabe auf den Sorter regelmäßig vereinzelt, und i.a. jeweils einzeln auf einen Förderplatz des Sorters aufgegeben, und zwar bei mehreren Aufgabestellen vorzugsweise auf den nächsten sich der betreffenden Aufgabestelle nähernden freien Aufnahmeplatz des Sorters, um dessen Durchsatz kapazität so gut wie möglich auszunutzen, wobei es nicht selten vorkommt, daß längere Stückgutteile zwei (oder gar mehr) (Einzel-)Förderplätze belegen, so daß die jeweils beteiligten zwei oder mehr Fördereinheiten dann entsprechend synchron gesteuert werden müssen, weil sie gleichsam als eine ("überlange") Fördereinheit fungieren.

Um eine gezielte Abgabe der Stückgutteile an der jeweils vorgesehenen Zielstelle zu bewirken, sind verschiedene Möglichkeiten/Ausgestaltungen bekannt. So sind bspw. seitlich der Förderbahn angeordnete sog. Pusher bekannt, die jeweils einer Zielstelle gegenüber seitlich zum Sorter angeordnet sind, und ein an einer Zielstelle abzugebendes Stückgutteil mittels eines i.w. quer zur Förderrichtung des Sorters aktivierbaren Stößels od.dgl. vom Sorter herunterstoßen. Eine derartige Stückgutabgabe ist jedoch insb. bei relativ hoher Sortiergeschwindigkeit für diverse Stückgüter schon deshalb ungeeignet, weil dabei wegen der entsprechend geringen zur Verfügung stehenden Abgabezeit entsprechend hohe Pusherbeschleunigungen erforderlich sind, die beim Einwirken eines Pushers auf ein abzugebendes Stückgutteil mit einer entsprechend großen Stoßkraft auf das Stückgutteil einwirken müssen, und dieses dabei beschädigen können.

Eine andere bekannte Möglichkeit der Stückgutabgabe von einem Sorter besteht in dem Einschwenken eines ebenfalls stationären Abweisers an einer Zielstelle. Auch diese Entleerungs- bzw. Abgabemöglichkeit ist jedoch ersichtlich nur für Sorter mit relativ langsamer Fördergeschwindigkeit geeignet, und weist selbst dann den Nachteil auf, daß ein abzugebendes Stückgutteil beim Gegenfahren gegen einen eingeschwenkten Abweiser relativ zu seiner Förderstellung um eine Vertikalachse verdreht werden kann, so daß es insb. bei relativ langen Stückgutteilen zu unkontrollierten Relativbewegungen zwischen Stückgut und Sorter bzw. Abgabestation (= Zielstelle) kommen kann.

Bei den beiden vorgenannten Sortertypen ist es ersichtlich grundsätzlich nicht unbedingt erforderlich, den Sorter als Gliederförderer auszubilden, und zwar insb. dann nicht, wenn die Förderbahn lediglich in einer Horizontalebene verläuft, obwohl dieses auch bei den vorgenannten oder ähnlichen Abgabe-Arbeitsweisen i.a. zweckmäßig ist.

Um insb. auch gerade empfindliche Stückgutteile jeweils an der für sie vorgesehenen Zielstelle ohne Überwindung eines großen Reibungswiderstandes und die hierdurch häufig bewirkte Verdrehung beim Abgabevorgang und ohne Gefahr eines Überschlagens möglichst präzis und damit zielgenau sowie auf i.w. gleichem Höhenniveau und damit insgesamt äußerst schonend sowie effektiv von einem Sorter abgeben zu können, sind Sorter entwickelt worden, deren Förder- bzw. Aufnahmeplätze jeweils aus einem sog. Quergurtförderer bestehen. Diese Quergurtförderer weisen jeweils einen antreibbaren endlosen Fördergurt auf, der um zwei mit gegenseitigem Abstand angeordnete, in Förderrichtung des Sorters verlaufende Rollen bzw. Walzen umgelenkt ist, von denen die eine Rolle (ggf. über ein Getriebe) von einem an der betreffenden Fördereinheit (bzw. einer benachbarten Fördereinheit) angeordneten, also mit dem Sorter umlaufenden Elektromotor so anzutreiben, daß das Obetrtrum des Quergurtförderers sich zur vorgesehenen Zielstelle hin bewegt. Dabei ist der Quergurtförderer einer Fördereinheit jeweils an einer Stützeinrichtung befestigt, welche unter Bildung einer aus sämtlichen Stützeinrichtungen bestehenden Gliederkette an ihrem vorderen und hinteren Endabschnitt gelenkig mit der Stützeinrichtung der vorhergehenden bzw. nachfolgenden Fördereinheit verbunden ist, und die an ihrem dem Quergurtförderer abgekehrten unteren Endabschnitt an zwei parallelen, mit gegenseitigem Abstand angeordneten, die vorgegebene Förderbahn bestimmenden (Stütz- und Führungs-)Schienen abgestützt und geführt ist.

Wenn sich bei einem solchen Quergurt-Sorter eine mit einem Stückgut belegtes Fördereinheit der vorgegebenen Zielstelle nähert, erhält der Antrieb des Quergurtförderers bei Erreichen der Zielstelle ein Einschaltsignal und wird mit einer Spannungs- bzw. Stromquelle verbunden, so daß das betreffende Stückgutteil bei unverminderter Sortergeschwindigkeit, die heutzutage bereits relativ hoch sein kann, von dem Quergurtförderer quer zur lokalen Sorter-Längsförderrichtung seitlich in Richtung auf die Zielstelle abgefördert wird, und dabei (ggf. über eine Rutsche) von einem Aufnahmemittel (bei dem es sich um einen Behälter oder ebenfalls um einen Förderer handeln kann) aufgenommen wird, dessen Aufnahmefläche sich ggf./bevorzugt i.w. auf dem gleichen Niveau wie die Oberseite des Obertrums des Quergurtförderers befindet aber auch tiefer liegen kann.

Die Elektromotoren der Querförderer eines Querförderer-Sorters erhalten ihre elektrische Antriebsenergie i.a. über elektrische Leitungen, die über Schleifkontakte der betreffenden Fördereinheit mit einer stationären Stromschiene verbunden sind, welche an eine elektrische Spannungsquelle angeschlossen ist, wie dieses bspw. auch von S- bzw. U-Bahnen bekannt ist, und regelmäßig dann eingesetzt wird, wenn ein mit einem elektrischen Antrieb versehenes, bewegliches "Teil" von einer stationären Spannungsquelle mit elektrischer Energie versorgt werden muß.

Ein erheblicher Nachteil dieser Querförderer-Sorter liegt darin, daß ihr Schleifleitungssystem einem erheblichen Verschleiß unterliegt, da die Stromabnehmer sich während des Sorterbetriebes ständig unter erheblichem Andruck an die Stromschiene relativ zu dieser bewegen, und da es dabei zwangsläufig zu einer erheblichen Reibung unter relativ großer Erwärmung kommt. Diese Sorter sind daher im Hinblick auf die erforderlichen Wartungs- und Reparaturarbeiten, aber auch schon im Hinblick auf den Installationsaufwand relativ teuer. Es kommt hinzu, daß die Wartungs- und Reparaturarbeiten jeweils einen Betriebsausfall des Sorters und damit der gesamten Verteilanlage zur Folge haben, was bspw. schon bei Sortieranlagen der Post oder in Versandhäusern höchst mißlich ist, und bspw. für Gepäck-Sortieranlagen auf Flughäfen völlig inakzeptabel ist.

Um diese und weitere Nachteile zu vermeiden, ist auch bereits vorgeschlagen worden, ähnliche Sorter mit Reibrädern zu versehen, die beim Betrieb des Sorters an den Schienen in Drehung versetzt werden, und mit Dynamos im Eingriff sind, welche die für den Antrieb der Quergurtförderer erforderliche elektrische Energie erzeugen. Bei diesen Reibrad-Quergurtförderer-Sortern entfällt zwar der erhebliche Verschleiß zwischen den Stromabnehmern und der Stromschiene (und die hierdurch verursachte Verschmutzung), doch hat sich herausgestellt, daß es dabei zwischen den Reibrädern und den Stütz- und Führungsschienen einerseits sowie den Dynamos andererseits aufgrund des unvermeidlichen Schlupfes zu erheblichen Verschleißerscheinungen kommen kann, die nicht nur ebenfalls zu erheblichen Verschmutzungen führen, sondern dadurch auch häufige Wartungs- und Reparaturarbeiten erforderlich machen. Dieses ist schon deshalb erforderlich, weil der Abrieb sich regelmäßig reibmindernd auf den Kontakt zwischen den Reibrädern und den Schienen bzw. den Dynamos auswirkt, so daß von den Dynamos erzeugbare elektrische Energie schließlich von Förderelement zu Förderelement schwankt, und in Einzelfällen zu gering ist, um die erforderliche elektrische Energie zum Antrieb eines Antriebes für den Quergurtförderer einer Fördereinheit bereitzustellen.

Die WO 00/23203 offenbart eine Anordnung zur induktiven Energieübertragung von einer stationären Stromschiene auf die beweglichen Förderelemente eines Sorters, die jeweils einen elektrischen Antrieb aufweisen, mittels dessen ihr Tragelement an der jeweiligen Abgabestelle so zu bewegen ist, daß das von einem Förderelement geförderte Stückgutteil von dem Sorter seitlich abgegeben wird. Konkret wird ein Quergurt-Sorter beschrieben, dessen Tragelemente aus quer zur Sorter-Förderrichtung verlaufenden Quergurtförderern bestehen, welche an der jeweiligen Abgabestelle durch ihren Elektromotor so anzutreiben sind, daß das von ihnen jeweils abgestützte Stückgutteil seitlich aus dem Sorter abgegeben wird.

Schließlich sind noch als Gliederförderer ausgebildete sog. Kippschalen-Sorter bekannt, deren die Tragschale bzw. Tragplatte tragender oberer Endabschnitt jeder Fördereinheit aus seiner i.a. i.w. horizontalen Förderstellung an der jeweiligen Zielstelle in eine schräge Kippstellung zu kippen ist, was ein seitliches Abgleiten des betreffenden Stückgutteils an der vorgesehenen Zielstelle bewirkt. Für derartige Kippschalen-Sorter sind wiederum diverse unterschiedliche Ausgestaltungen bekannt. Ihr Grundprinzip besteht bisher darin, daß an jeder Zielstelle eine stationäre Kippeinrichtung vorhanden ist, die ggf. mit einem sich der betreffenden Abgabestelle nähernden Kippelement so in Eingriff gebracht werden kann, daß die Trag- bzw. Kippschale in der zuvor beschriebenen Weise seitlich gekippt wird, und die nach dem Passieren der betreffenden Zielstelle der betreffenden Fördereinheit bewirkt, daß deren Kipp- bzw. Tragschale wieder in ihre aufgerichtete Förderstellung gebracht (und in dieser in geeigneter Weise verriegelt) wird.

Bei den bekannten Kippschalen-Sortern wird das zur Abgabe eine Stückgutteils an einer vorgegebenen Zielstelle von einer Fördereinheit herangeförderte Stückgutteil also durch ein extern ausgelöstes Kippen der Kippschale bewirkt, wobei angemerkt sei, daß das die Stützfläche für das (die) Stückgutteil(e) bildende Element einer Sorter-Fördereinheit zwar i.a. zweckmäßigerweise schalenförmig ausgebildet ist, dieses aber nicht notwendigerweise sein muß, wobei man es in der Praxis dann i.a. dennoch als "Kippschale" bezeichnet.

Eine solche externe Auslösung des Kippens mittels einer an jeder Zielstelle angeordneten Einrichtung, die beim Passieren von Förderelementen außer Eingriff mit dem Sorter ist, und nach Erhalt eines Kippbefehls von einer Steuereinrichtung in geeigneter Weise jeweils mit dem betreffenden Kipp-Förderelement in Eingriff zu bringen ist (bspw. durch rechtzeitiges Herausschwenken einer Steuerrolle, die in eine Art Weiche der Kippeinrichtung des betreffenden Kipp-Förderelementes greift, und dessen Kippschale damit an der Zielstelle zum Kippen und damit zum Abgeben des betreffenden Stückgutteils bringt) hat zwar gewisse Vorteile, doch auch nicht unerhebliche Nachteile. Der wesentliche Vorteil besteht (insb. bei relativ großen bzw. langen Sorteranlagen) darin, daß nicht jedes Förderelement mit einer eigenen, in geeigneter Weise ansteuerbaren Kippeinrichtung versehen zu werden braucht, sondern lediglich die einzelnen Zielstellen. Ein wesentlicher Nachteil besteht aber ersichtlich darin, daß die Beanspruchungen der Kippeinrichtungen und auch noch der mit ihnen verbundenen Elemente insb. bei relativ hohen Sorter-Fördergeschwindigkeiten entsprechend hoch sind.

Es wäre daher häufig höchst wünschenswert, die einzelnen Förderelemente eines Kippschalen-Sorters mittels einer geeigneten elektrischen Steuerung extern ansteuern zu können, ohne daß es dabei/dafür eines mechanischen Eingriffes mittels einer ortsfesten externen Einrichtung an der jeweiligen Zielstelle bedarf, zumal es nicht selten auch gewünscht wird, Zielstellen nach Belieben zu verlegen, ohne daß dieses mit aufwendigen Umrüstungsarbeiten verbunden ist.

Ein Kippschalen-Sorter, dessen einzelne Förderelemente jeweils einen elektromotorisch antreibbaren Antrieb aufweisen, ist aus der DE 87 14 976 Ul bekannt, und zwar speziell für einen Sorter, an dem entlang seiner Förderbahn Entladestationen angeordnet sind, von denen jede eine Anzahl von übereinander angeordneten Entlademündungen aufweist, die jeweils zu getrennten Stückgut-Aufnahmebehältern führen. Bei diesem bekannten Sorter sind Einrichtungen zum Vorpositionieren der Förderebene genau auf der Höhe der vorbestimmten Entlademündung während der Förderung vorgesehen, wobei die Ebene zum Fördern der Stückgutteile am Wagen (= Fördereinheit) bevorzugt über eine parallelogrammförmige Gelenkkonstruktion angebracht ist, und wobei Einrichtungen vorgesehen sind, die auf diese Gelenkkonstruktion einwirken, um die Förderebene auf die vorbestimmte Höhe zu bringen, wobei die Einrichtungen zum Einwirken auf die Gelenkkonstruktion jeweils aus einem Elektromotor bestehen können, der mit einer Schraubenspindel gekoppelt ist, die mit einem Läufer kämmt, der an der Gelenkkonstruktion befestigt ist.

Für den vorgenannten Spezialfall wurden deshalb Elektroantriebe vorgesehen, weil man zu der Auffassung gelangt war, daß bei relativ hoher Sorter-Fördergeschwindigkeit eine pneumatische Betätigung beweglicher Trennwände im Inneren von Aufnahmetrichtern an Zielstationen zu langsam arbeiten, während eine elektromotorische Betätigung für jenen Spezialfall geeignet erschien.

Dabei laufen die als sog. Wagen ausgebildeten einzelnen Fördereinheiten in üblicher Weise an Schienen geführt längs der vorgegebenen Förderbahn, und sind jeweils von einem Antriebsmotor angetrieben, der über Schleifkontakte von einer Reihe von längs der Förderbahn verlegter elektrischer Sammelschienen versorgt wird. Die Fördereinheiten bestehen jeweils aus einem von einem zweiten Elektromotor antreibbaren Quergurtförderer; und eine faltbare Hebelkonstruktion, die über eine Schraubenspindel von einem dritten Elektromotor antreibbar ist, kann den Quergurtförderer nach Erhalt eines Steuersignals auf die gewünschte Höhe anheben.

Bei einer anderen in der DE 87 14 976 U1 offenbarten Ausgestaltung bestehen die einzelnen Förderplätze nicht aus Quergurtförderern, sondern aus Kipp-Förderelementen mit einer konventionellen Kippschale (mit ebener Stützfläche), wobei an der faltbaren Hebelkonstruktion seitlich eine in einer Führung geführte Rolle angeordnet ist, um die Kippschalen jeweils auf das gewünschte Abgabeniveau zu bringen, und wobei das Kippen bei dieser Ausführungsform in dieser Druckschrift als "in bekannter Weise" beschrieben wird, so daß davon auszugehen ist, daß es durch externen mechanischen Eingriff in der oben i.w. beschriebenen (konventionellen) Weise erfolgt.

Der vorliegenden Erfindung liegt die Aufgabe zugrunde, das (Arbeits-)Verfahren der eingangs beschriebenen Gattung sowie ein hierfür geeignetes Kipp-Förderelement, dessen Kippbewegung mittels eines elektromotorischen Antriebes einzuleiten und durchzuführen ist, und dem die erforderliche elektrische Energie berührungslos zuzuführen ist, im Hinblick auf das bei berührungsloser Energie übertragung nur beschränkte Energieangebot insbesondere dahingehend zu verbessern, daß der jeweils bei der Einleitung eines Kippsvorgangs erforderliche Leistungsbedarf möglichst Klein gehalten wird, um Leistungsspitzen zu vermeiden, welche die zur Verfügung stehende Energie bw. Leistung ggf. überschreiten, wobei die Kipp-Förderelemente in ihrer aufgerichteten Förderstellung dennoch - ohne daß es zusätzlicher und zusätzlich zu betätigender mechanischer Verriegelungseinrichtungen bedarf - mechanisch verriegelt bzw. fest arretiert sein sollen, so daß die Kipp-Förderschalen auch bei einem Energieausfall oder einem Versagen der Antriebselemente fixiert bleiben, und es nicht zu Unfällen durch seitlich herabfallende Stückgutteile sowie deren Beschädigung kommen kann, wobei überdies eine relativ geringe Bauhöhe des Sorters angestrebt wird, und wobei weiterhin auch in den zwar geneigten, aber noch nicht vollständig gekippten Positionen der Kippschalen (etwa bei einem Stromausfall) eine selbsttätige Arretierung (Selbsthemmung) zu erreichen sein soll.

Die Lösung des verfahrensmäßigen Teils der obigen Aufgabe erfolgt erfindungsgemäß dadurch, daß der Elektromotor des elektromotorischen Kipp-Antriebes jedes Kipp-Förderelementes jeweils vor Einleitung einer Kippbewegung seiner Kippschale zunächst im Leerlauf ("Freilaufbetrieb") i.w. lastfrei (natürlich mit Ausnahme seiner relativ geringen mechanischen und elektrischen Eigenverluste) i.w. auf seine Nenndrehzahl gebracht wird.

Diese Lösung beruht unter anderem auf dem Umstand/der Überlegung, daß bei einer berührungslosen Übertragung elektrischer Energie die zur Verfügung stehende elektrische Leistung (hier: zum Antrieb eines mit Stückgut belasteten Kipp-Förderelementes) auf ein Maximum begrenzt ist.

Bis vor geraumer Zeit ist man noch davon ausgegangen, daß eine berührungslose Energieübertragung, die nicht nur Steuerungs- und Meßeinrichtungen versorgt, sondern auch die elektrischen Antriebe von Arbeits- bzw. Fördereinrichtungen, bei Einrichtungen mit höherem Leistungsbedarf technisch gar nicht möglich sei, da hierfür elektrische Leistungen in einer Größe benötigt werden, die nicht berührungslos zu übertragen sind. Diese Vermutung ist indes nur bedingt zutreffend, wenn die entsprechenden Einrichtungen in zweckmäßiger Weise ausgebildet bzw. betreiben (gesteuert) werden.

So ist bspw. mit der EP 1 231 163 auch bereits eine Stückgut-Lageeinrichtung zum definierten Ein- und Auslagern von Stückguteinheiten vorgeschlagen und mit großem Erfolg praktiziert worden, bei welcher u.a. auf einer Förderbahn ein elektromotorisch antreibbares Lagerfahrzeug verfahrbar ist, welches eine höhenverstellbare, verschwenkbare Aufnahmeeinrichtung für eine Stückgutcharge aufweist, und wobei eine Einrichtung zur berührungslosen Übertragung und Versorgung des Lagerfahrzeuges mit der erforderlichen Antriebs- und Steuerenergie vorgesehen ist, die einen mit hochfrequenter elektrischer Energie gespeisten, entlang der Förderbahn verlaufenden Leiter sowie einen berührungslos mit diesem zusammenwirkenden, am Lagerfahrzeug angeordneten, die von dem Leiter abgestrahlte elektrische Energie induktiv aufnehmenden Aufnehmer aufweist, welcher die aufgenommene elektrische Energie an einen Umformer des Lagerfahrzeuges weiterleitet, der sie in die zum Betrieb des Lagefahrzeuges erforderliche Energieform umwandelt, und diese an die Verbraucher weiterleitet. Bei dieser Stückgut-Lagereinrichtung ist immerhin eine elektrische Antriebsleistung von mehr als 6 kW erforderlich.

Dabei bleibt bei jenem Lagerfall - wie auch dem vorliegenden Fall - der bereits erwähnte Umstand, daß das Maximal-Leistungsangebot übersteigende Leistungsanforderungsspitzen, wie sie im vorliegenden Falle zu Beginn eines Kippvorgangs durch den sog. Losbrechwiderstand entstehen können, und bei einem konventionellen elektrischen Netz völlig unkritisch sind, bei berührungslos übertragener elektrischer Antriebsenergie auf jeden Fall zu vermeiden sind, so daß man schon unter diesem Gesichtspunkt bisher bei Sortern und anderen Arbeitsmaschinen den Einsatz bzw. die Verwendung berührungslos übertragener elektrischer Energie von vornherein weitgehend ausgeschlossen hat.

Dieses Vorurteil war/ist aber - zumindest bei der vorliegenden Anwendung - dann unbegründet, wenn man - wie unter Bezugnahme auf das Kennzeichen des Anspruches 1 bereits beschrieben - die beim Kippen eines Kipp-Förderelementes entstehenden, von dem Elektroantrieb bzw. dessen Motor zu überwindenden Widerstände gleichsam "aufspaltet" und nicht mehr in üblicher Weise simultan, sondern zeitlich versetzt nacheinander überwindet, also zunächst lediglich den Losbrechwiderstand des elektromotorischen Antriebes (bis zum Erreichen der Nenndrehzahl des Elektromotors), und erst dann, wenn sich die Drehmassen des Elektromotors und der ihm unmittelbar nachgeordneten Einrichtung(en) (insb. eines Getriebes) bereits im Nenn-Betriebszustand befinden, in dem der Elektromotor seine Nenndrehzahl (zumindest i.w.) erreicht hat, den Kippvorgang einleitet und durchführt.

Bevorzugt wird die Kippbewegung eines Kipp-Förderelementes - nach dem jeweiligen Erreichen der Nenndrehzahl des Elektromotors - jeweils so gesteuert, daß die dem Elektromotor zur Verfügung stehende elektrische Maximalleistung aus der berührungsfrei an ihn übertragenen elektrischen Energie ("Maximal-Leistungsangebot") während des gesamten Kippvorgangs zu keinem Zeitpunkt durch den Leistungsbedarf ("Leistungsanforderung") überschritten (aber zweckmäßigerweise auch optional genutzt) wird, wobei es zwecks Erzielung einer möglichst raschen Bewegung, d.h. einer möglichst raschen Durchführung eines jeden Kippvorgangs höchst zweckmäßig ist, wenn die Kippbewegung jeweils so gesteuert wird, daß dem zuvor im Leerlauf (zumindest i.w.) auf seine Nenndrehzahl hochgefahrenen Elektromotor bei und nach Einleitung des Kippvorgangs durch entsprechende Beschleunigung der betreffenden Kippschale nebst deren Stückgutlast jeweils (alsbald und dann auch weitgehend permanent) eine Leistung abverlangt wird, die i.w. gleich dem jeweiligen Maximalleistungsangebot der berührungsfrei zum Elektromotor übertragbaren/übertragenen elektrischen Leistung ist (aber eben nicht höher als diese), wobei ein zu kippendes Kipp-Förderelement ab Einleitung des Kippvorgangs bevorzugt i.w. so lange permanent im Sinne der durchzuführenden Kippbewegung beschleunigt wird, bis es seine Kipp-Endstellung (zumindest annähernd) erreicht hat.

Um dennoch relativ starke Stoßbelastungen zu vermeiden, ist es regelmäßig zweckmäßig, wenn ein kippendes Kipp-Förderelement kurz vor Erreichen seiner Kipp-Endstellung (also in der Endphase der Kippbewegung) abgebremst wird. Dieses kann zweckmäßigerweise elektrisch, aber auch in geeigneter Weise mechanisch erfolgen.

Im übrigen sei noch nachgetragen bzw. klargestellt, daß es sich als höchst zweckmäßig herausgestellt hat, wenn ein zu kippendes Kipp-Förderelement nach Einleitung des Kippvorgangs zumindest annähernd bis zum Erreichen seiner Kipp-Endstellung i.w. konstant beschleunigt wird, so daß es nicht zu Leistungsspitzen kommt.

Der vorrichtungsmäßige Teil des mit der vorliegenden Erfindung zu lösenden technischen Problems (Aufgabe) erfolgt nach dem Kennzeichen des Anspruches 8 erfindungsgemäß dadurch, daß der Kippeinrichtung eine Steuereinrichtung zugeordnet ist, die bewirkt, daß der Elektromotor des Elektro-Kippantriebes nach Erhalt eines Kipp-Steuersignals zunächst i.w. lastfrei im Leerlauf ("Freilaufbetrieb") i.w. bis auf seine Nenndrehzahl hochläuft, ohne dabei bereits die Kippeinrichtung zu betätigen, und daß die Kippeinrichtung durch die ihr zugeordnete Steuereinrichtung selbsttätig betätigt wird, sobald der Elektromotor seine Nenndrehzahl erreicht hat.

In bevorzugter Ausgestaltung der vorliegenden Erfindung weist die Kippeinrichtung bzw. die ihr zugeordnete Steuereinrichtung eine Freilaufeinrichtung auf, die - nachdem ein Kipp-Förderelement ein Kippsignal erhalten hat - beim Hochfahren des Elektromotors auf dessen Nenndrehzahl rechtzeitig vor der jeweils vorgegebenen Zielstelle bewirkt, daß das auf seiner Stützfläche wenigstens eine an einer Zielstelle abzugebende Stückgutteil abstützende Stützmittel während des Hochfahrens des Elektromotors auf seine Nenndrehzahl zunächst in seiner aufgerichteten (also noch nicht gekippten) Förderstellung verbleibt, und daß die Kipp- und/oder Steuereinrichtung so ausgebildet ist bzw. sind, daß das Stützmittel selbsttätig aus seiner aufgerichteten Förderstellung in (s)eine schräge Kippstellung gekippt wird, wenn der Elektromotor seine Nenndrehzahl (zumindest i.w.) erreicht hat.

Dabei sei an dieser Stelle noch einmal ausdrücklich darauf verwiesen, daß das erfindungsgemäße Kipp-Förderelement so ausgebildet sein kann, daß es zur einen oder anderen Seite (also zur Außenseite oder zur Innenseite) des Sorters zu kippen ist, bzw. ggf. auch wahlweise zur einen oder anderen Seite.

Höchst bevorzugt ist vorgesehen, daß das an seiner Oberseite die Stützfläche aufweisende Stützmittel ein ("Gelenk"-)Lager aufweist, welches an der Kippachse (begrenzt) schwenkbar gelagert ist; daß ein Verriegelungsmittel vorgesehen ist, mittels dessen das Stützmittel in seiner Förderstellung lösbar (vorzugsweise mechanisch) zu verriegeln ist; daß die Kipp- und/oder Steuereinrichtung bzw. deren Freilaufeinrichtung eine um eine zur Kippachse parallele zweite Schwenkachse begrenzt schwenkbare Hebelanordnung mit einem Führungsmittel aufweist, welches in einer unterhalb der Stützfläche vorgesehenen Führung des Stützmittels geführt ist; und daß der Elektromotor mit der Hebelanordnung über ein Getriebe verbunden ist, mittels dessen die Motordrehzahl schließlich am Stützmittel in geeigneter Weise zu reduzieren ist, wobei die Führung für das Führungsmittel der Hebelanordnung in einem ersten Führungsabschnitt zunächst kreisbogenförmig um die zweite Schwenkachse verläuft, so daß eine Drehung der Abtriebsachse des Elektromotors - und somit der Hebelanordnung - während der Kreisbewegung des Führungsmittels auf dem kreisbogenförmigen ersten Führungsabschnitt der Führung um die zweite Schwenkachse zunächst keine Kippbewegung des Stützmittels und des (der) von diesem abgestützten Stückgutteils (Stückgutteile) um die zweite Schwenkachse bewirkt, und wobei ein sich an den ersten Führungsabschnitt unmittelbar anschließender zweiter Führungsabschnitt nicht mehr kreisbogenförmig zur zweiten Schwenkachse verläuft, sondern derart, daß - beim weiteren Drehen des zwischenzeitlich i.w. auf seine Nenndrehzahl hochgefahrenen Elektromotors - von der Hebelanordnung eine Kraft bzw. ein Drehmoment auf das Stützmittel ausgeübt wird, welche(s) ein Kippen des Stützmittels um die Kippachse einleitet und durchführt.

Bevorzugt weist die Hebelanordnung zwei mit gegenseitigem Längsabstand angeordnete Hebel auf, die zweckmäßigerweise i.w. scheibenförmig ausgebildet sein können, wobei die Hebel gem. einer bevorzugten Ausbildung jeweils an ihrer/einer Stirnseite mit einer Verzahnung versehen sein können, die jeweils mit einem (Stirn-)Zahnrad zusammenwirkt, wobei die (Stirn-)Zahnräder das Getriebe bzw. einen Teil des Getriebes des elektromotorischen Kippantriebes bilden.

Das Getriebe kann bevorzugt überdies ein dem Stirnradgetriebe vorgeordnetes (oder ggf. auch nachgeordnetes) selbsthemmendes weiteres Getriebe, wie bspw./insb. ein Schneckengetriebe, aufweisen, welches von dem Elektromotor des elektromotorischen Kippantriebes anzutreiben ist. Dadurch ist in jeder Zwischen-Kippstellung eines Kipp-Förderelementes selbsttätig eine Selbsthemmung zu erreichen, die verhindert, daß es im Falle eines Stromausfalls zu einem unkontrollierten Kippen eines Kipp-Fördererelementes und damit zu einem nicht vorgesehenen Abwurf eines Stückgutteils oder gar mehrerer Stückgutteile kommen kann, was nicht nur unter Unfallverhütungsvorschriften höchst bedeutsam ist, sondern ersichtlich auch verhindert, daß es dabei zu einer Beschädigung oder gar Zerstörung von Stückgutteilen kommen kann.

Das Führungsmittel ist bei einer bevorzugten Ausgestaltung der vorliegenden Erfindung aus Führungsrollen gebildet, die jeweils an einem Endabschnitt eines Hebels angeordnet sind, wobei es sich als besonders zweckmäßig erwiesen hat, wenn jeder Hebel an seinen beiden Endabschnitten mit einer Führungsrolle versehen ist. Dadurch sind die Dimensionen des Stützmittels besonders klein zu halten, wie bei Betrachtung der Ausführungsbeispiele sogleich deutlich wird.

Weiterhin ist bevorzugt vorgesehen, daß das - vorzugsweise an seiner Oberseite mit einer an ihrer Oberseite die Stützfläche bildenden Kippschale verschraubte - Stützmittel aus zwei mit gegenseitigem Horizontalabstand i.w. scheibenförmigen Segmenten od.dgl. besteht, die so auf der Kippachse angeordnet sind, daß ihre Längsmittelachse in der aufgerichteten Förderstellung des Kipp-Förderelementes i.w. vertikal und damit rechtwinklig zur Längsmittelachse der Hebel verläuft, wie weiter unten anhand eines Ausführungsbeispiels noch weiter erläutert ist. Dabei sind die scheibenförmigen Segmente des Stützmittels bevorzugt i.w. spiegelsymmetrisch ausgebildet, wie dieses insb. für Kipp-Förderelemente höchst zweckmäßig ist, die in einem Sorter für beiderseitiges Kippen eingesetzt werden sollen.

Für die nachstehend noch im einzelnen beschriebene Funktionsweise des erfindungsgemäßen Kipp-Förderelementes ist es weiterhin höchst zweckmäßig, wenn die zweite Schwenkachse nicht nur oberhalb der Kippachse angeordnet ist, sondern dabei auch senkrecht über ihr.

Weiterhin sei noch darauf hingewiesen, daß die Hebel bevorzugt jeweils i.w. spiegelsymmetrisch zu einer durch ihre Schwenkachse (= zweite Schwenkachse) verlaufenden Mittelachse ausgebildet sind, und daß sie bevorzugt so angeordnet sind, daß ihre jeweils durch ihre beiden endseitig angeordneten Führungsmittel verlaufende Längsachse in der Förderrichtung des Kipp-Förderelementes i.w. horizontal verläuft, wie dieses beim Blick auf die in der Zeichnung dargestellten und nachstehend noch im einzelnen beschriebenen Ausführungsbeispiele ohne weiteres deutlich wird.

Die die Führungsrollen führenden Führungen sind in bevorzugter Ausgestaltung jeweils als Ausnehmungen der das Stützmittel bildenden Segmente ausgebildet, deren zu den Stirnseiten der Segmente i.w. parallel verlaufende Führungsflächen Laufbahnen für die Führungsrollen bilden.

Schließlich sei noch erwähnt, daß ein maximaler Kippwinkel der Kippschale von etwa 35° in aller Regel ausreicht, um jegliches Stückgut einerseits schonend und andererseits sicher und rasch an einer Zielstelle von der Kippschale eines Kipp-Förderelementes abzugeben; und daß es sich gezeigt hat, daß es höchst zweckmäßig und demgemäß zu bevorzugen ist, wenn der Hebel-Schwenkwinkel bei einem maximalen Kippwinkel des Stützmittels von ca. 35° etwa 90° beträgt.

Weiterhin hat sich gezeigt, daß man die Ausgestaltung zweckmäßigerweise etwa so vornimmt, daß der Freilaufbetrieb (Stützmittel-Kippwinkel β = 0°) bei einem Hebel-Schwenkwinkel α von ca. 15° endet, wobei dann also im Bereich eines Hebel-Schwenkwinkels zwischen 15° und 90° der Kippvorgang des Stützmittels und damit der mit diesem fest verbundenen Kippschale von zunächst 0° (in der normalen Förderstellung) bis auf max. etwa 35° durchgeführt wird.

Bevorzugte Ausgestaltungen der vorliegenden Erfindung sind in den Unteransprüchen beschrieben.

Die Erfindung wird nachstehend an Ausführungsbeispielen unter Bezugnahme auf eine Zeichnung weiter erläutert. Es zeigt:
- **Fig. 1**: einen kurzen Abschnitt des Förderstrangs eines Kippschalen-Sorters mit zwei einander benachbarten Kipp-Förderelementen in perspektivischer Darstellung, von denen sich das vordere Kipp-Förderelement in seiner aufgerichteten normalen Förderstellung befindet, und das in Fig. 1 dahinter liegende Kipp-Förderelement in seiner Kipp-Endstellung;
- **Fig. 2**: verschiedene Stellungen des aus zwei mit Abstand zueinander angeordneten, scheibenförmigen Segmenten bestehenden Stützmittels sowie der mit diesem zusammenwirkenden Führungsrollen (der besseren Übersicht halber unter Fortlassung der Hebelanordnung);
- **Fig. 3**: eine Darstellung gem. Fig. 2, bei welcher zusätzlich der dem dargestellten scheibenförmigen Segment des Stützmittels zugeordnete Hebel der Hebelanordnung dargestellt ist;
- **Fig. 4**: das Getriebe des Elektroantriebes eines Kipp-Förderelementes in perspektivischer Darstellung;
- **Fig. 5**: verschiedene (Meß-)Kurven, welche (von oben nach unten) den Stützmittel-Kippwinkel, die Stromaufnahme des Elektromotors (entsprechend dem jeweiligen Motor-Drehmoment), die Leistungsaufnahme des Elektromotors (als Produkt aus der Stromaufnahme und der Istspannung), die Motorspannung sowie die Sollwertrampe des Elektromotors als Sollspannung über einer Zeitachse (Abszisse) zeigen;
- **Fig. 6**: eine perspektivische Darstellung des elektromotorischen Kippantriebes für ein Kipp-Förderelement;
- **Fig. 7**: eine Darstellung gem. Fig. 6 unter Fortlassung des Gehäuses bei einer Stellung des Stützmittels in aufgerichteter Förderstellung;
- **Fig. 8**: eine Fig. 7 entsprechende Darstellung, bei welcher sich das Stützmittel in einer Kippstellung befindet; und
- **Fig. 9**: eine Explosionsdarstellung des elektromotorischen Kippantriebes in einer gegenüber den Fig. 6 - 8 verkleinerten Darstellung.

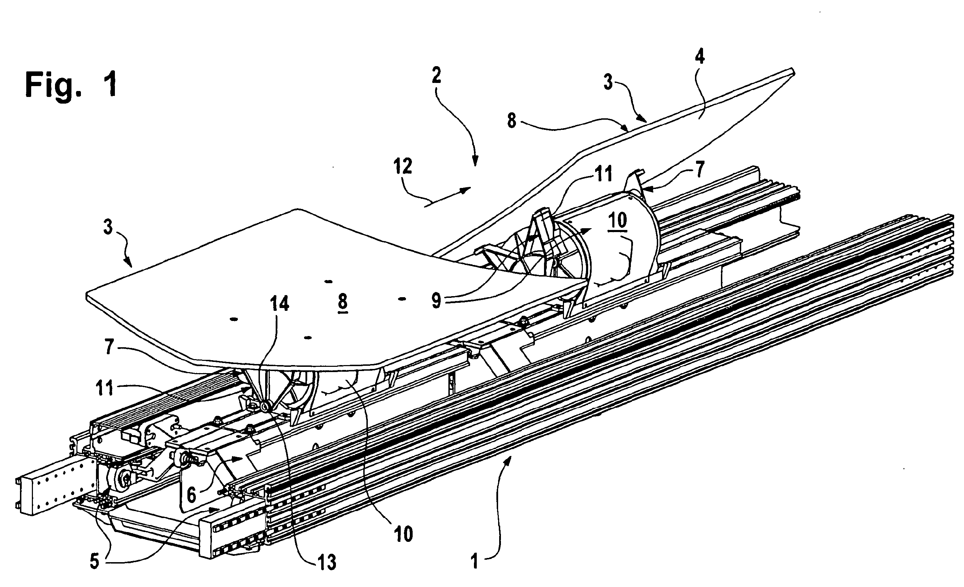

Fig. 1 zeigt einen kurzen Abschnitt eines im Ganzen mit 1 bezeichneten Kippschalen-Sorters zum gezielten einzelnen Abgeben von zuvor an einer nicht dargestellten Aufgabestelle aufgenommene, nicht dargestellten Stückgutteilen, wie z.B. Paketen, Gepäckstücken od.dgl., an einer von einer Vielzahl von Zielstellen 2. Dabei zeigt Fig. 1 zwei Kipp-Elemente 3, von denen sich das vordere Kipp-Förderelement in seiner aufgerichteten, normalen Förderstellung befindet, und das rechts in Fig. 1 befindliche hintere Kipp-Förderelement 3 in seiner max. Kippstellung, in welcher seine Kippschale 4 zur Horizontalen um 35° zu einer Seite hin geneigt ist.

Der Kippschalen-Sorter 1 weist tatsächlich eine Vielzahl von Kipp-Förderelementen 3 auf, die entlang einer in sich geschlossenen, horizontalen Schienenführung 5 in an sich bekannter Weise mittels eines elektrisch antreibbaren Linearmotors antreibbar verfahrbar und jeweils gelenkig miteinander verbunden sind.

Die Kipp-Förderelemente 3 weisen zur jeweiligen Abstützung (wenigstens) eines Stückgutteils ein relativ zu einem nicht-kippbaren Unterteil 6 beidseitig seitlich kippbares, im Ganzen mit 7 bezeichnetes Stützmittel mit einer in seiner aufgerichteten normalen Förderstellung i.w. horizontalen Stützfläche 8 auf, welches nach Erhalt eines Kipp-Steuersignals von einer nicht dargestellten Steuereinrichtung des Sorters 1 zwecks Abgabe des jeweils geförderten Stückgutteils mittels eines im Ganzen mit 9 bezeichneten Elektro-Kippantriebes mit einem als Gleichstrommotor ausgebildeten Elektromotor 10, sowie mittels einer dem Elektro-Kippantrieb 9 zugeordneten, im Ganzen mit 11 bezeichneten Kippeinrichtung, die weiter unten im einzelnen erläutert wird, an der jeweils vorgegebenen Zielstelle 2 aus seiner aufgerichteten Förderstellung um eine jeweils in Förderrichtung 12 des Kipp-Förderelementes 3 verlaufende Kippachse 13 zur einen oder anderen Seite der Förderbahn hin begrenzt (nämlich um 35°) in eine schräge Abgabestellung (Kippstellung) zu kippen ist.

Dabei ist der Elektromotor 10 von einer geeigneten Einrichtung, die funktionell bzw. "elektrisch" i.w. der in der EP 1 231 163 beschriebenen, dort für eine Stückgut-Lagereinrichtung bestimmten Einrichtung entspricht, und daher hier nicht im einzelnen beschrieben werden soll, berührungslos mit elektrischer Energie zu speisen. Da bei einer berührungslosen Energieübertragung die zur Verfügung stehende elektrische Leistung auf ein vorgegebenes Maximum begrenzt ist, die Kippbewegung aber dennoch erst benachbart zu der jeweils vorgegebenen Zielstelle 2 eingeleitet werden soll/kann, und daher jeweils möglichst relativ rasch erfolgen soll, ist der Kippeinrichtung 11 eine weiter unten im einzelnen beschriebene (mechanische) Steuereinrichtung zugeordnet, die bewirkt, daß der Elektromotor 10 des elektromotorischen Kippantriebes 9 nach Erhalt eines Kipp-Steuersignals aus dem Stillstand zunächst i.w. lastfrei im Leerlauf ("Freilaufbetrieb") bis auf seine Nenndrehzahl n₀ zu fahren ist und entsprechend betätigt wird, und daß die Kippeinrichtung 11 durch die ihr zugeordnete Steuereinrichtung selbsttätig (aber erst dann) betätigt wird, sobald der Elektromotor 10 des Elektro-Kippantriebes 9 seine Nenndrehzahl n₀ erreicht hat.

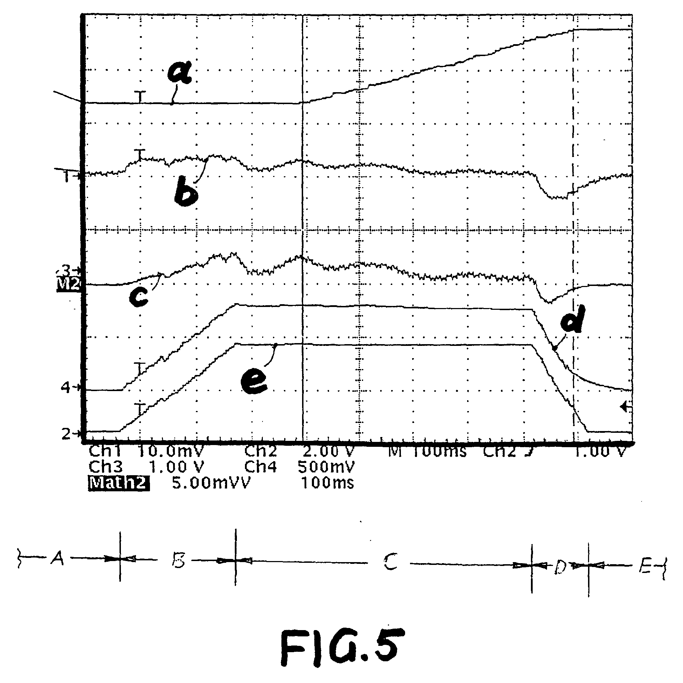

Dabei wird die Kippbewegung eines zu kippenden Kipp-Förderelementes 3 nach dem jeweiligen Erreichen der Nenndrehzahl n₀ des Elektromotors (10) jeweils so gesteuert, daß die dem Elektromotor 10 zur Verfügung stehende elektrische Maximalleistung aus der berührungsfrei an ihn übertragenen elektrischen Energie ("Maximalleistungsangebot") während des gesamten Kippvorgangs (bzw. ggf. auch später während des Rückkippvorgangs) zu keinem Zeitpunkt durch den Leistungsbedarf ("Leistungsanforderung") überschritten wird; und zwar wird zwecks Erzielung einer möglichst raschen Kippbewegung die Kippbewegung jeweils so gesteuert, daß dem im Leerlauf auf seine Nenndrehzahl n₀ hochgefahrenen Elektromotor (10) bei und nach Einleitung des Kippvorgangs durch entsprechende Beschleunigung der betreffenden Kippschale 4 nebst dem auf dieser abgestützten Stückgutteil jeweils eine Leistung abverlangt wird, die i.w. gleich (aber eben nicht höher) dem Maximalleistungsangebot der berührungsfrei zum Elektromotor übertragenen elektrischen Leistung ist. Dabei wird ein zu kippendes Kipp-Förderelement 3 ab Einleitung des Kippvorgangs i.w. solange permanent beschleunigt, bis es seine Kipp-Endstellung erreicht hat, und es wird kurz vor Erreichen seiner Kipp-Endstellung elektrisch abgebremst, wobei noch nachzutragen ist, daß ein zu kippendes Kippelement 3 nach Einleitung des Kippvorgangs i.w. bis zum Erreichen seiner Kipp-Endstellung i.w. konstant beschleunigt wird, wie weiter unten unter Bezugnahme auf Fig. 5 noch weiter erläutert wird.

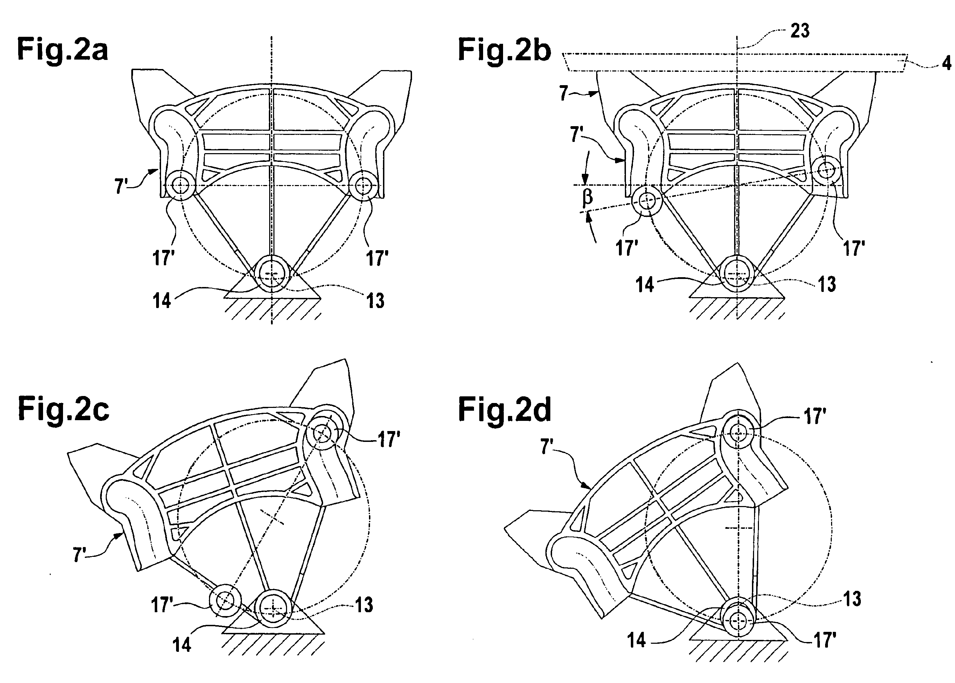

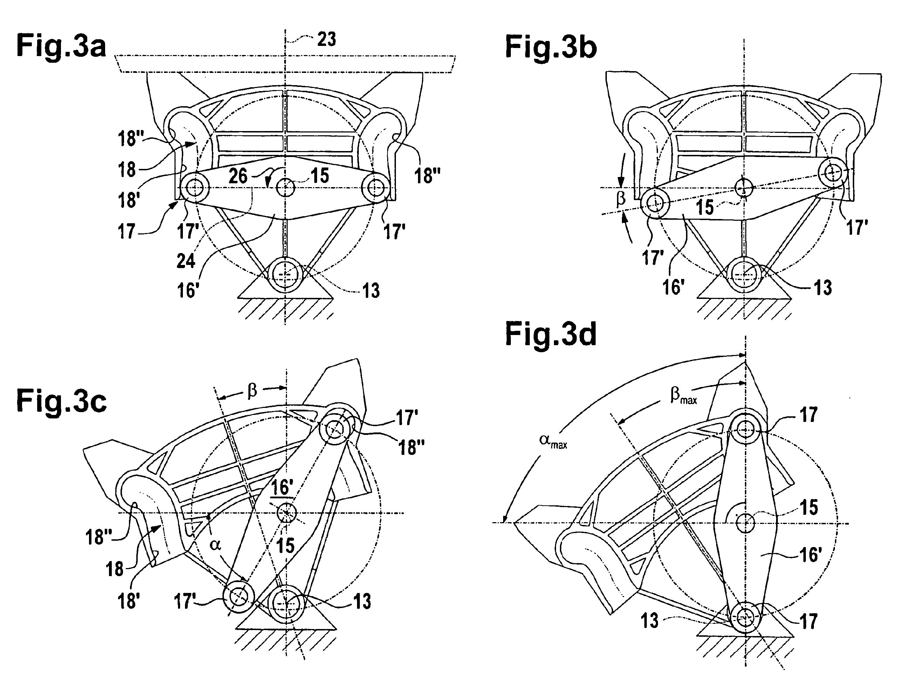

Die Kippeinrichtung 11 bzw. die ihr zugeordnete Steuereinrichtung weist eine Freilaufeinrichtung auf, die - nachdem ein Kipp-Förderelement 3 ein Kippsignal erhalten hat - beim Hochfahren des Elektromotors 10 auf dessen Nenndrehzahl n₀ noch vor der jeweils vorgegebenen Zielstelle 2 bewirkt, daß das auf seiner Stützfläche 8 abgestützte, an einer Zielstelle 2 abzugebende Stückgutteil, welches von dem Stützmittel 7 konkret: auf dessen Kippschale 4 gehalten ist, während des Hochfahrens des Elektromotors 10 zunächst noch in seiner aufgerichteten, nicht-gekippten Förderstellung verbleibt, wobei die Kipp- bzw. Steuereinrichtung so ausgebildet ist/sind, daß das Stützmittel 7 selbsttätig aus seiner aufgerichteten Förderstellung in seine schräge Kippstellung gekippt wird, wenn der Elektromotor 10 seine Nenndrehzahl n₀ erreicht hat. Zu diesem Zweck ist das an seiner Oberseite die Stützfläche 8 aufweisende Stützmittel 7 mit einem ("Gelenk"-)Lager 14 versehen (s. auch Fig. 2, 3), welches an der Kippachse 13 (begrenzt) schwenkbar gelagert ist.

Weiterhin ist ein weiter unten im einzelnen beschriebenes Verriegelungsmittel vorgesehen, mittels dessen das Stützmittel 7 in seiner Förderstellung lösbar mechanisch zu verriegeln ist.

Die Kipp- und Steuereinrichtung bzw. deren weiter unten noch im einzelnen beschriebene Freilaufeinrichtung weisen eine um eine zur Kippachse 13 parallele und senkrecht über dieser angeordnete zweite Schwenkachse 15 auf, um welche eine weiter unten noch im einzelnen beschriebene Hebelanordnung 16 mit einem Führungsmittel 17 begrenzt schwenkbar ist, welches in einer unterhalb der Stützfläche 8 vorgesehenen Führung 18 des Stützmittels 7 geführt ist (s. insb. Fig. 3), wobei der Elektromotor 10 mit der Hebelanordnung 16 über ein im Ganzen mit 19 bezeichnetes Getriebe verbunden ist.

Wie die Fig. 2 und 3 zeigen, weist die Führung 18 einen erste Führungsabschnitt 18 auf, der kreisbogenförmig um die zweite Schwenkachse 15 ausgebildet ist, so daß eine Drehung der Abtriebsachse des Elektromotors 10 - und somit der Hebelanordnung 16 - während der Kreisbewegung des Führungsmittels 17 auf dem kreisbogenförmigen ersten Führungsabschnitt 18' um die zweite Schwenkachse 15 zunächst keine Kippbewegung des Stützmittels 7 und des von diesem abgestützten Stückgutteils um die zweite Schwenkachse oder um die Kippachse 13 bewirkt.

An den ersten Führungsabschnitt 18' schließt sich unmittelbar ein zweiter Führungsabschnitt 18" (beidseitig) an, der nicht mehr kreisbogenförmig zur zweiten Schwenkachse 15 verläuft, sondern derart, daß beim weiteren Drehen des zwischenzeitlich auf seine Nenndrehzahl n₀ hochgefahrenen Elektromotors 10 von der Hebelanordnung 16 eine Kraft - bzw. ein Drehmoment - auf das Stützmittel 7 ausgeübt wird, welche(s) ein Kippen des Stützmittels 7 um die Kippachse 13 einleitet und durchführt.

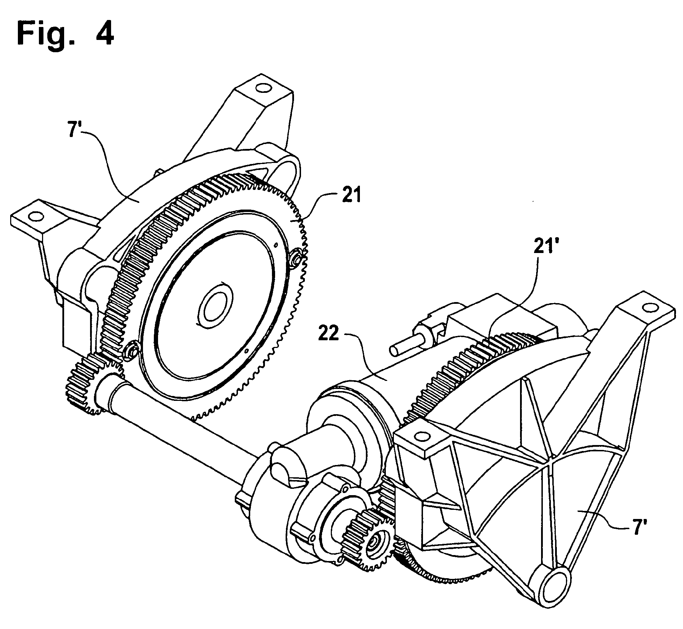

Die Hebelanordnung 16 weist zwei mit gegenseitigem Längsabstand angeordnete Hebel 16' und 16" auf, die jeweils i.w. scheibenförmig ausgebildet sind, und die jeweils an ihrer Stirnseite mit einer Verzahnung versehen sind, die jeweils mit einem Stimzahnrad 21 bzw. 21' zusammenwirkt (s. Fig. 4), wobei die Stirnzahnräder 21, 21' einen Teil des Getriebes 19 des Elektro-Kippantriebes 9 bilden. Denn dem Stirnradgetriebe 21, 21' ist ein (selbsthemmendes) Schneckengetriebe 22 vorgeordnet, welches von dem Elektromotor 10 anzutreiben ist.

Es sei noch nachgetragen, daß das Führungsmittel 17 aus vier Führungsrollen 17' besteht, die jeweils an einem Endabschnitt eines Hebels 16' bzw. 16" angeordnet sind, und zwar jeweils an beide Endabschnitten der Hebel 16', 16" (s. Fig. 2 und 3, wobei in Fig. 2 der besseren Übersicht halber nur die beiden Führungsrollen 17', 17' des einen Hebels 16' dargestellt sind, und dieser selbst fortgelassen ist, allerdings in der korrespondierenden Fig. 3 erkennbar ist, wo er im Zusammenhang mit einem scheibenförmigen Segment des Stützmittels 7 angeordnet ist).

Das an seiner Oberseite mit einer - an ihrer Oberseite die Stützfläche 8 bildenden - Kippschale 4 verschraubte Stützmittel 7 besteht aus zwei in gegenseitigem Horizontalabstand angeordneten, i.w. scheibenförmigen Segmenten 7', 7', die so auf der Kippachse 13 angeordnet sind, daß ihre Längsmittelachse 23 in der Förderstellung des Kipp-Förderelementes 3 vertikal - und damit rechtwinklig zur Längsmittelachse 24 der beiden Hebel 16' bzw. 16" - verläuft.

Es ist insb. aus den Fig. 2 und 3 erkennbar, daß die scheibenförmigen Segmente 7' des Stützmittels 7 spiegelsymmetrisch ausgebildet sind, wobei ihre Längsmittelachse 23 in der Symmetrieebene liegt.

Auch die beiden Hebel 16', 16" der Hebelanordnung 16 verlaufen jeweils spiegelsymmetrisch zu einer durch die zweite Schwenkachse 15 verlaufenden Mittelachse. Sie sind so angeordnet, daß ihre jeweils durch ihre beiden Führungsrollen 17', 17' verlaufende Längsachse in der Förderrichtung 12 des Kipp-Förderelementes 3 (horizontal) verläuft.

Die die Führungsrollen 17' führenden Führungen 18 des von den scheibenartigen Segmenten 7', 7' gebildeten Stützmittels 7 sind jeweils als Ausnehmungen in den Segmenten 7' ausgebildet, deren zu den Stirnseiten der Segmente i.w. parallel verlaufende Führungsflächen 25 Laufbahnen für die Führungsrollen 17' bilden.

Fig. 2 zeigt insb. zur Erläuterung der Freilaufeinrichtung eine seitliche Draufsicht auf ein Segment 7' des Stützmittels 7 sowie die beiden Führungsrollen 17', 17' des Hebels 16' (ohne diesen selbst zu zeigen) in mehreren Betriebsstellungen, und zwar zeigt Fig. 2a die Grundstellung (mit strichpunktiert angedeuteter Kippschale 4), in welcher sowohl der Hebel-Schwenkwinkel α als auch der Stützmittel-Kippwinkel β (und damit auch der mit dem Stützmittel 7 fest verschraubten Kippschale 4) gleich 0° ist.

Fig. 2b zeigt den Freilaufbereich, in dem sich die Führungsrollen 17' auf dem kreisbogenförmigen ersten Führungsabschnitt 18' um die zweite Schwenkachse 15 bewegen (s. auch Fig. 3), so daß zwar der Stützmittel-Kippwinkel β nach wie vor 0° ist, der Hebel-Schwenkwinkel α aber ungleich 0° (s. auch Fig. 3b). In diesem Freilaufbereich fährt der Elektromotor 10 auf seine Nenndrehzahl n₀ hoch, und zwar (bis auf seine Eigenverluste) i.w. lastfrei, wobei die Fig. 2b und 3b bereits die Endstellung im Freilaufbereich zeigen, in welcher der Hebel-Schwenkwinkel α 15° beträgt.

Die Fig. 2c und 3c zeigen eine Zwischenstellung im Kippbereich, in welcher sowohl der Hebel-Schwenkwinkel α als auch der Stützmittel-Kippwinkel β ungleich 0° sind, da sich der Hebel 16' über die Freilaufbereichgrenze von α = 15° bereits deutlich hinausbewegt hat, und sich die Führungsrollen 17' bereits im zweiten Führungsabschnitt 18" befinden (was bzgl. des Hebels 16' indes nur bei einer Führungsrolle 17' der Fall ist, da sich die andere Führungsrolle 17' zwischenzeitlich bereits aus der linken Führung in Fig. 2c bzw. 3c herausbewegt hat).

Die Fig. 2d bzw. 3d zeigen schließlich die Kipp-Endstellung, in welcher der Hebel-Schwenkwinkel α 90° beträgt, und der Stützmittel-Kippwinkel β 35°.

Fig. 4 zeigt noch die Anordnung und relative Zuordnung des aus den Stirnzahnrädern 21, 21' und dem Scheckengetriebe 22 bestehenden Getriebes zu den beiden scheibenförmigen Segmenten 7', 7' des Stützmittels 7 (u.a. unter Fortlassung der Kippschale 4); und aus Fig. 5 ist - von oben nach unten - ein gemessener Verlauf des Stützmittel-Kippwinkels β (Kurve a), der Stromaufnahme I_{M} des Elektromotors 10 (entsprechend dessen Drehmoment; Kurve b), der Leistungsaufnahme des Elektromotors 10 als Produkt aus der Stromaufnahmen I_{M} und der Istspannung Vₗₛₜ (entsprechend der Leistung P; Kurve c), der Motorspannung Vₗₛₜ (Kurve d), und der Sollwertrampe des Motors 10 als Spannung V_{Soll} (Kurve e) jeweils über einer Zeitachse erkennbar.

Der (Abszissen-)Abschnitt A entspricht einem (Förder-)Betrieb, bei dem ein mit einem Stückgutteil beladenes Kipp-Förderelement 3 Streckenfahrt durchführt, die am Grenzpunkt zum Bereich B funktionell beendet ist. An diesem Punkt erhält das Kipp-Förderelement 3 von einer externen Steuereinrichtung, die mit einem Rechner versehen oder verbunden ist, rechtzeitig vor der vorgesehenen Zielstelle 2 ein definiertes Kippsignal, wodurch die Sollwertrampe für den Elektromotor 10 des Elektro-Kippantriebes 9 des betreffenden Kipp-Förderelementes 3 ausgelöst wird (Kurve e), und die Motorspannung V_{Ist} (Kurve d) entsprechend (i.w. linear) ansteigt, so daß sich der Elektromotor 10 in Bewegung setzt, und damit der gesamte Eletro-Kippantrieb 9: Der Elektromotor 10 treibt also über das Schneckengetriebe und das Stirnzahnradgetriebe 21, 21' die beiden Hebel 16', 16" der Hebelanordnung 16 (in den Fig. 2 und 3 gem. dem Pfeil 26 entgegen dem Uhrzeigersinne) an, so daß sich die beiden Hebel 16', 16" gem. dem Pfeil 26 entgegen dem Uhrzeigersinne um die zweite Schwenkachse 15 zu drehen beginnen, allerdings im Freilaufbetrieb, da ihre jeweils an ihren beiden Enden angeordneten Führungsrollen 17' sich zunächst auf dem ersten Führungsabschnitt 18' befinden, der kreisbogenförmig um die zweite Schwenkachse 15' verläuft.

Wenn die Hebel 16', 16" den Hebel-Schwenkwinkel βₘₐₓ von 15° erreicht haben, ist der Elektromotor 10 zwischenzeitlich auf seine Nenndrehzahl n₀ lastfrei hochgelaufen, so daß sich der gesamte Elektro-Kippantrieb 9 im Nenn-Betriebszustand befindet, und danach die Führungsrollen 17' jeweils in den zweiten Führungsabschnitt 18" ihrer jeweiligen Führungsbahn 18 überführt, der nicht mehr kreisbogenförmig um die zweite Schwenkachse 15 verläuft, sondern (stetig) gleichsam aus dieser Kreisbahn nach außen hinausläuft, mit der Folge, daß die Führungsrollen 17' beim weiteren Drehen des Elektromotors 10 nunmehr ein Drehmoment auf die scheibenförmigen Segmente 7', 7' ausüben, welche gemeinsam das mit der Kippschale 14 verschraubte Stützmittel 7 bilden, welches dann mithin aus seiner aufgerichteten Förderstellung in Richtung des Pfeiles 26 um die Kippachse 13 geschwenkt wird, bis der Stützmittel-Schwenkwinkel βₘₐₓ in der Kipp-Endstellung seinen Maximalwert von 35° erreicht hat, und das von dem Kipp-Förderelement 3 abgestützte Stückgutteil seitlich von dem Sorter 1 abgeben wird. In dieser Stellung haben sich die beiden Hebel 16' und 16" jeweils aus ihrer Normalstellung im Förderzustand um αₘₐₓ = 90° entgegen dem Uhrzeigersinn verschwenkt.

Anschließend wird der - als Gleichstrommotor ausgebildete - Elektromotor 10 durch Umpolung selbsttätig gesteuert reversiert, so daß ein Rückkippen der Kippschale aus ihrer Kipp-Endstellung in ihre aufgerichtete Förderstellung (s. Fig. 2a bzw. 3a) erfolgt, und damit auch nicht nur wiederum in der Förderstellung, sondern auch in allen Zwischenstellungen stets eine verläßliche mechanische Verriegelung, die sich - abgesehen einmal von der Führung - schon aus dem Umstand ergibt, daß das Schneckengetriebe 22 selbsthemmend ist. Die entsprechenden Arbeitsbereiche sind in Fig. 5 mit C bzw. D bzw. E bezeichnet, wobei E wiederum dem Arbeitsbereich A entspricht, also dem reinen Förderbetrieb.

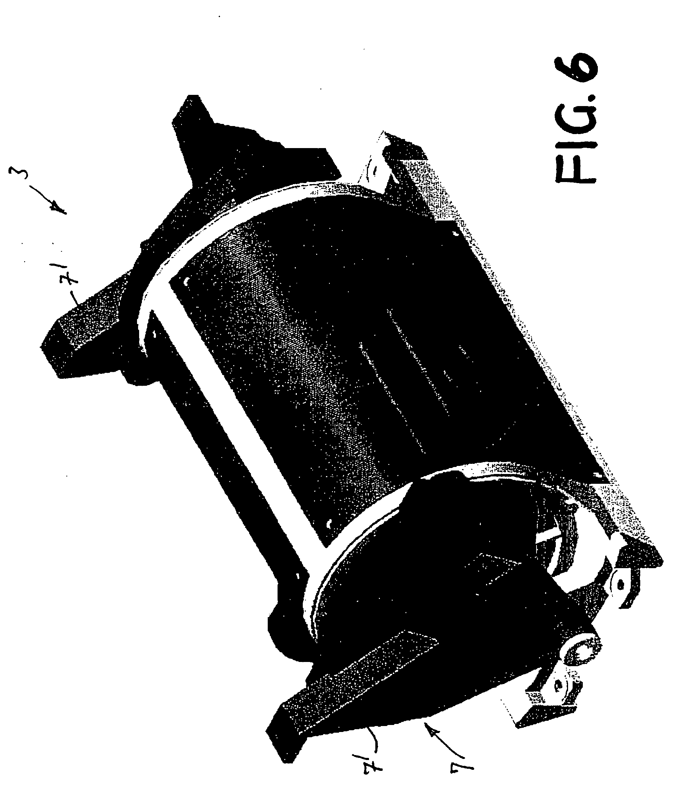

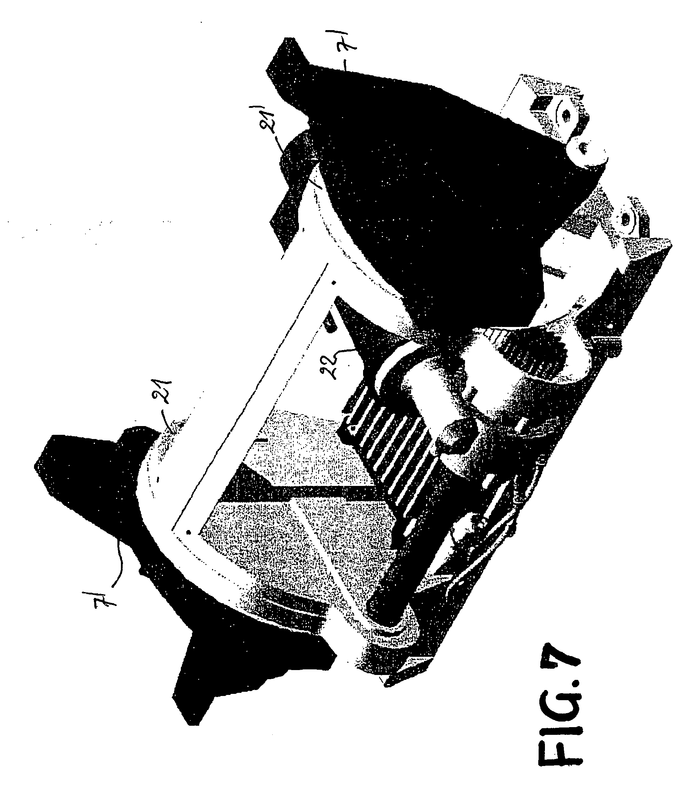

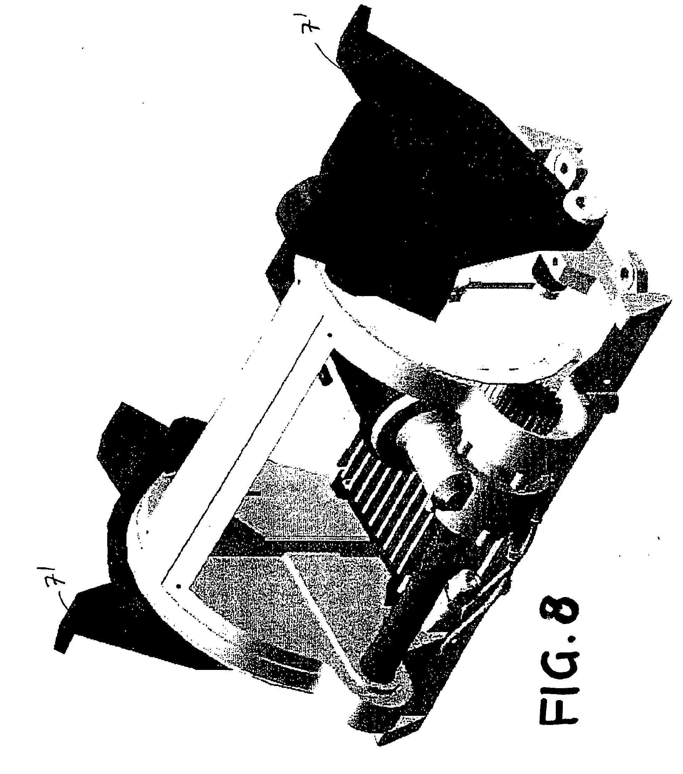

Die Fig. 6 - 8 zeigen schließlich noch jeweils in perspektivischer Darstellung eine Teildarstellung eines erfindungsgemäßen Kipp-Förderelementes 3 mit dessen zwei i.w. scheibenförmigen Segmenten 7', 7', die gemeinsam das Stützmittel 7 bilden (ohne die Kippschale 4, die an der Oberseite der Segmente 7' mit diesen verschraubt ist), wobei Fig. 7 der Komplettdarstellung gem. Fig. 6 ohne Gehäuse entspricht, und erkennen läßt, in welcher Relation das in Fig. 4 zeichnerisch dargestellte Getriebe zu den beiden scheibenförmigen Segmenten 7', 7' des Stützmittels 7 steht, wo und wie das Getriebe 21, 21', 22 dabei angeordnet ist, und - in Zusammenschau mit Fig. 1 - wie dieser wesentliche Teil eines Kipp-Förderelementes 3 zu der Schienenführung 5 etc. steht. Dabei zeigt Fig. 7 eine Darstellung im Förderzustand mit aufgerichteten Segmenten 7', 7', und die Fig. 8 eine entsprechende Darstellung in der Kipp-Endstellung (Stützmittel-Kippwinkel βₘₐₓ = 35°).

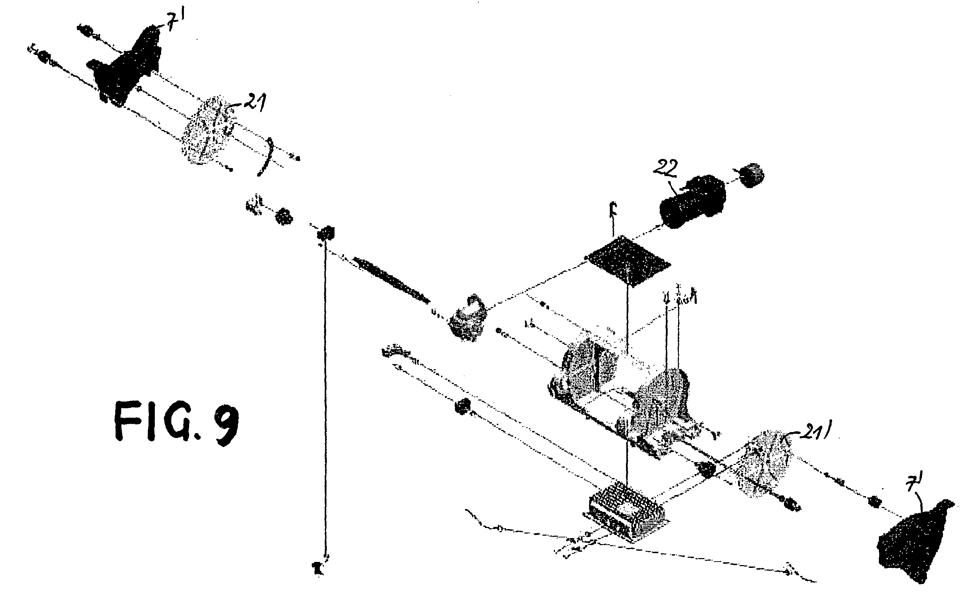

Fig. 9 zeigt schließlich noch eine Explosionsdarstellung der Darstellungen gem. den Fig. 6 - 8 (gegenüber diesen erheblich verkleinert).

Mit der vorliegenden Erfindung wurde ein gattungsgemäßes Kipp-Förderelement für einen Kippschalen-Sorter geschaffen, der einen (Kipp-) Betrieb mittels berührungslos übertragener elektrischer Energie unter optimaler Ausnutzung des dabei zur Verfügung stehenden maximalen elektrischen Energieangebotes aufgrund "Widerstandsaufspaltung mit Zeitverzögerung" und dennoch ein hinreichend rasches Kippen nach Erhalt eines Kippsignals vor Erreichen einer vorgegebenen Zielstelle zuläßt, wobei das erfindungsgemäße Kipp-Förderelement aufgrund des Freilaufbetriebes auch in der aufgerichteten Förderstellung völlig unabhängig von der jeweiligen Stellung des Antriebes stets eine exakte Positionierung der Kipp-Förderschale garantiert, so daß die Anforderungen an die Motorsteuerung bzgl. der Genauigkeit der Schalenpositionierung durch den Motor ganz erheblich zu reduzieren sind bzw. weitgehend in Fortfall kommen, und wobei in der aufgerichteten Förderstellung stets eine zuverlässige Arretierung gegeben ist, die auch bei etwaigem Energieausfall oder Versagen der Antriebselemente zuverlässig garantiert ist, wobei die Kipp-Förderschalen dennoch weiterhin fixiert bleiben, was für die Unfallsicherheit einerseits sowie die gebotene Schonung der Stückgutteile ein ganz erheblicher Vorteil ist; wobei sich weiterhin die Bauhöhe insb. aufgrund des sehr niedrig zu positionierenden Drehpunktes (Kippachse) der Kippschale ganz erheblich reduziert, so daß der Strecken-Raumbedarf äußerst gering ist; und wobei schließlich aufgrund des selbsthemmenden (Schnecken-)Getriebes auch in den geneigten Zwischenstellungen des Stützmittels und damit der mit diesem verbundenen festen Kippschale stets eine Selbsthemmung garantiert ist, so daß sich ein mit erfindungsgemäßen Kipp-Förderelementen bestückter Sorter unter Verschiedenen Gesichtspunkten durch erhebliche Vorteile gegenüber dem vergleichbaren Stand der Technik auszeichnet.

### Bezugszeichenliste

| | | | |
|---|---|---|---|
| **1** | Kippschalensorter | | |
| **2** | Zielstellen | | |
| **3** | Kipp-Förderelemente | | |
| **4** | Kippschale | | |
| **5** | Schienenführung | | |
| **6** | Unterteil (von 3) | | |
| **7** | Stützmittel (von 3) | **7'** | Segmente (von 7) |
| **8** | Stützfläche (von 3 bzw. 7) | | |
| **9** | Elektro-Kippantrieb | | |
| **10** | Elektromotor (von 9) | | |
| **11** | Kippeinrichtung | | |
| **12** | Förderrichtung | | |
| **13** | Kippachse | | |
| **14** | Lager (von 7) | | |
| **15** | zweite Schwenkachse | | |
| **16** | Hebelanordnung | **16',16"** | Hebel (von 16) |
| **17** | Führungsmittel | **17'** | Führungsrollen |
| **18** | Führung | **18' 18"** | erster Führungsabschnitt zweiter Führungsabschnitt |
| **19** | Getriebe | | |
| **21, 21'** | Stirnzahnräder | | |
| **22** | Schneckengetriebe | | |
| **23** | Längsmittelachse (von 7 bzw. 7') | | |
| **24** | Längsmittelachse (von 16' bzw. 16") | | |
| **25** | Führungsflächen (für 17'; in 7') | | |
| **26** | Pfeil | | |
| α | Hebel-Schwenkwinkel | | |
| β | Stützmittel-Kippwinkel | | |

## Patentansprüche

1. Verfahren zum wahlweisen einzelnen oder gruppenweisen Kippen der Kippschalen (4) eines Kippschalen-Sorters (1) an einer Zielstelle (2), dessen Kipp-Förderelemente (3) jeweils eine Kippschale (4) zum Aufnehmen eines Stückgutteils, einen elektromotorischen KippAntrieb (9) mit einem mit berührungslos übertragbarer elektrischer Energie zu speisenden Elektromotor (10) und eine von diesem antreibbare Kippeinrichtung (11) aufweisen, mittels welcher die Kippschale (4) nach Auslösung eines entsprechenden Steuersignals aus ihrer Förderstellung mit im wesentlichen horizontaler Stützfläche (8) seitlich in eine Abgabestellung zu kippen ist, **dadurch gekennzeichnet, daß** der Elektromotor (10) eines Kipp-Förderelementes (3) jeweils vor Einleitung einer Kippbewegung seiner Kippschale (4) zunächst im Leerlauf i.w. lastfrei i.w. auf seine Nenndrehzahl gebracht wird.

2. Verfahren nach Anspruch 1, **dadurch gekennzeichnet, daß** die Kippbewegung der Kippschale (4) eines Kipp-Förderelementes (3) jeweils so gesteuert wird, daß die dem Elektromotor (10) zur Verfügung stehende elektrische Maximalleistung während des Kippvorgangs zu keinem Zeitpunkt durch den Leistungsbedarf überschritten wird.

3. Verfahren nach Anspruch 2, **dadurch gekennzeichnet, daß** die Kippbewegung jeweils so gesteuert wird, daß dem zuvor im Leerlauf zumindest i.w. auf seine Nenndrehzahl hochgefahrenen Elektromotor (10) bei und nach Einleitung des Kippvorgangs durch entsprechende Beschleunigung der betreffenden Kippschale (4) nebst Stückgutlast jeweils eine Leistung abverlangt wird, die i.w. gleich dem jeweiligen Maximal-Leistungsangebot ist.

4. Verfahren nach einem oder mehreren der vorhergehenden Ansprüche, **dadurch gekennzeichnet, daß** eine zu kippende Kippschale (4) ab Einleitung des Kippvorgangs i.w. so lange permanent beschleunigt wird, bis sie ihre Kipp-Endstellung erreicht hat.

5. Verfahren nach einem oder mehreren der vorhergehenden Ansprüche, **dadurch gekennzeichnet, daß** eine zu kippende Kippschale (4) kurz vor Erreichen ihrer Kipp-Endstellung abgebremst wird.

6. Verfahren nach Anspruch 5, **dadurch gekennzeichnet, daß** eine kippende Kippschale (4) in der Kipp-Endphase elektrisch abgebremst wird.

7. Verfahren nach einem oder mehreren der Ansprüche 4 bis 6, **dadurch gekennzeichnet, daß** eine zu kippende Kippschale (4) nach Einleitung des Kippvorgangs bis zum Erreichen seiner Kipp-Endstellung i.w. konstant beschleunigt wird.

8. Kipp-Förderelement (3) für einen Kippschalen-Sorter (1) zum gezielten i.a. einzelnen Abgeben von zuvor an einer Aufgabestelle aufgenommenen Stückgutteilen an einer von mehreren Zielstellen (2), mit einer Vielzahl von entlang einer i.a. in sich geschlossenen, horizontalen, ggf. schräge und/oder vertikale Förderabschnitte aufweisenden Führung (5) antreibbar verfahrbaren, gelenkig miteinander verbundenen Kipp-Förderelementen (3), wobei das Kipp-Förderelement (3) zur Abstützung eines Stückgutteils ein relativ zu einem nicht-kippbaren Unterteil (6) seitlich kippbares Stützmittel (7) mit einer von einer Kippschale (4) gebildeten in seiner aufgerichteten Förderstellung i.w. horizontalen Stützfläche (8) aufweist und wobei das Stützmittel (7) nach Erhalt eines Kipp-Steuersignals von einer Sorter-Steuereinrichtung mittels eines Elektro-Kippantriebes (9) mit einem insb. als Gleichmotor ausgebildeten, berührungslos mit elektrischer Energie zu speisenden Elektromotor (10), sowie mittels einer Kippeinrichtung (11) an der jeweils vorgegebenen Zielstelle (2) um eine jeweils in Förderrichtung (12) des Kipp-Förderelementes (3) verlaufende Kippachse (13) zur einen oder/und anderen Seite der Förderbahn hin in eine schräge Abgabestellung zu kippen ist, um das an einer Aufgabestelle aufgenommene Stückgutteil an der Zielstelle (2) abzugeben, **dadurch gekennzeichnet, daß** der Kippeinrichtung (11) eine Steuereinrichtung zugeordnet ist, die bewirkt, daß der Elektromotor (10) nach Erhalt eines Kipp-Steuersignals zunächst i.w. lastfrei im Leerlauf i.w. bis auf seine Nenndrehzahl hochläuft, ohne dabei bereits die Kippeinrichtung (11) zu betätigen, und daß die Kippeinrichtung (11) durch die Steuereinrichtung selbsttätig betätigt wird, sobald der Elektromotor (10) seine Nenndrehzahl erreicht hat.

9. Kipp-Förderelement nach Anspruch 8, **dadurch gekennzeichnet, daß** es mittels der Steuereinrichtung so gesteuert ist, daß die seinem Elektromotor (10) zur Verfügung stehende elektrische Maximalleistung während des Kippvorgangs zu keinem Zeitpunkt durch seinen Leistungsbedarf überschritten wird.

10. Kipp-Förderelement nach Anspruch 9, **dadurch gekennzeichnet, daß** die Kippbewegung seines Stützmittels (7) so gesteuert ist, daß dem zuvor im Leerlauf zumindest i.w. auf seine Nenndrehzahl hochgefahrenen Elektromotor (10) bei und nach Einleitung des Kippvorgangs durch entsprechende Beschleunigung der mit dem Stützmittel verbundenen Kippschale (4) nebst deren Stückgutlast eine Leistung abverlangt wird, die i.w. gleich dem Maximalleistungsangebot ist.

11. Kipp-Förderelement nach Anspruch 10, **dadurch gekennzeichnet, daß** sein mit der Kippschale (4) verbundenes Stützmittel (7) ab Einleitung des Kippvorgangs i.w. so lange permanent beschleunigt wird, bis seine Kipp-Endstellung erreicht ist.

12. Kipp-Förderelement nach einem oder mehreren der Ansprüche 8 bis 11, **gekennzeichnet durch** eine Bremseinrichtung, mittels welcher sein Stützmittel (7) mit der daran befestigten Kippschale (4) sowie der auf dieser befindlichen Stückgutlast kurz vor Erreichen der Kipp-Endstellung abzubremsen ist.

13. Kipp-Förderelement nach Anspruch 11 oder 12, **dadurch gekennzeichnet, daß** sein Stützmittel (7) beim Kippen nach Erhalt eines Kipp-Steuersignals bzw. nach Einleitung des Kippvorgangs bis zum Erreichen seiner Kipp-Endstellung i.w. konstant zu beschleunigen ist.

14. Kipp-Förderelement nach einem oder mehreren der Ansprüche 8 bis 13, **dadurch gekennzeichnet, daß** die Kippeinrichtung (11) bzw. die ihr zugeordnete Steuereinrichtung eine Freilaufeinrichtung aufweist, die - nachdem das Kipp-Förderelement (3) ein Kippsignal erhalten hat - beim Hochfahren des Elektromotors (10) auf dessen Nenndrehzahl bewirkt, daß das Stützmittel (7) zunächst in seiner aufgerichteten Förderstellung verbleibt; und daß die Kipp- bzw. Steuereinrichtung so ausgebildet ist bzw. sind, daß das Stützmittel (7) selbsttätig in eine schräge Kippstellung gekippt wird, wenn der Elektromotor (10) seine Nenndrehzahl erreicht hat.

15. Kipp-Förderelement nach Anspruch 14, **dadurch gekennzeichnet, daß** das Stützmittel (7) ein Lager (14) aufweist, mittels dessen es an der Kippachse (13) begrenzt schwenkbar gelagert ist; daß ein Verriegelungsmittel vorgesehen ist, mittels dessen das Stützmittel (7) in seiner Förderstellung lösbar mechanisch zu verriegeln ist; daß die Kipp- und/oder Steuereinrichtung bzw. deren Freilaufeinrichtung eine um eine zur eine Kippachse (13) parallele zweite Schwenkachse (15) begrenzt schwenkbare Hebelanordnung (16) mit einem Führungsmittel (17) aufweist, welches in einer unterhalb der Stützfläche (8) vorgesehenen Führung (18) des Stützmittels (7) geführt ist; und daß der Elektromotor (10) mit der Hebelanordnung (16) über ein Getriebe (19) verbunden ist, wobei die Führung (18) in einem ersten Führungsabschnitt (18') kreisbogenförmig um die zweite Schwenkachse (15) ausgebildet ist, so daß eine Drehung der Abtriebsachse des Elektromotors (10) - und somit der Hebelanordnung (16) - während der Kreisbewegung des Führungsmittels (17) auf dem kreisbogenförmigen ersten Führungsabschnitt (18') um die zweite Schwenkachse (15) zunächst keine Kippbewegung des Stützmittels (7) und des von diesem abgestützten Stückgutteils um die zweite Schwenkachse (15) oder die Kippachse (13) bewirkt; und wobei ein sich an den ersten Führungsabschnitt (18') anschließender zweiter Führungsabschnitt (18") nicht mehr kreisbogenförmig zur zweiten Schwenkachse (15) verläuft, sondern derart, daß beim weiteren Drehen des zwischenzeitlich i.w. auf seine Nenndrehzahl hochgefahrenen Elektromotors (10) von der Hebelanordnung (16) eine Kraft bzw. ein Drehmoment auf das Stützmittel (7) ausgeübt wird, welche(s) ein Kippen des Stützmittels (7) um die Kippachse (13) einleitet und durchführt.

16. Kipp-Förderelement nach Anspruch 15, **dadurch gekennzeichnet, daß** die Hebelanordnung (16) zwei mit gegenseitigem Abstand angeordnete Hebel (16', 16") aufweist.

17. Kipp-Förderelement nach Anspruch 16, **dadurch gekennzeichnet, daß** die Hebel (16', 16") i.w. scheibenförmig ausgebildet sind.

18. Kipp-Förderelement nach Anspruch 16 oder 17, **dadurch gekennzeichnet, daß** die Hebel (16', 16") jeweils an ihrer Stirnseite mit einer Verzahnung versehen sind, die jeweils mit einem Stirnzahnrad (21, 21') zusammenwirkt, wobei die Stirnzahnräder (21, 21') das Getriebe (19) bzw. einen Teil des Getriebes des Elektroantriebes (9) bilden. H

19. Kipp-Förderelement nach Anspruch 18, **dadurch gekennzeichnet, daß** den Stirnzahnrädern (21, 21') eine selbsthemmende Einrichtung wie z.B./insb. ein Schneckengetriebe (22) zu- bzw. vorgeordnet ist.

20. Kipp-Förderelement nach einem oder mehreren der Ansprüche 15 bis 19, **dadurch gekennzeichnet, daß** das Führungsmittel (17) aus Führungsrollen (17') gebildet ist, die jeweils an einem Endabschnitt eines Hebels (16'bzw. 16") angeordnet sind.

21. Kipp-Förderelement nach Anspruch 20. **dadurch gekennzeichnet, daß** jeder Hebel (16', 16") an seinen beiden Endabschnitten mit einer Führungsrolle (7') versehen ist.

22. Kipp-Förderelement nach einem oder mehreren der Ansprüche 8 bis 21, **dadurch gekennzeichnet, daß** das Stützmittel (7) aus zwei mit gegenseitigem Horizontalabstand angeordneten, i.w. scheibenförmigen Segmenten (7') besteht, die so auf der Kippachse (13) angeordnet sind, daß ihre Längsmittelachse (23) in der Förderstellung des Kipp-Förderelementes (3) i.w. vertikal verläuft.

23. Kipp-Förderelement nach Anspruch 22, **dadurch gekennzeichnet, daß** die scheibenförmigen Segmente (7') des Stützmittels (7) i.w. spiegelsymmetrisch ausgebildet sind, wobei ihre Längsmittelachse (23) in der Symmetrieebene liegt.

24. Kipp-Förderelement nach einem oder mehreren der Ansprüche 15 bis 23, **dadurch gekennzeichnet, daß** die zweite Schwenkachse (15) oberhalb der Kippachse (13) angeordnet ist.

25. Kipp-Förderelement nach Anspruch 24, **dadurch gekennzeichnet, daß** die zweite Schwenkachse (15) senkrecht über der Kippachse (13) angeordnet ist.

26. Kipp-Förderelement nach einem oder mehreren der Ansprüche 16 bis 25, **dadurch gekennzeichnet, daß** die Hebel (16, 16") jeweils i.w. spiegelsymmetrisch zu einer durch die zweite Schwenkachse (15) verlaufenden Mittelachse ausgebildet sind.

27. Kipp-Förderelement nach einem oder mehreren der Ansprüche 16 bis 26, **dadurch gekennzeichnet, daß** die beiden Hebel (16', 16") so angeordnet sind, daß ihre jeweils durch ihre beiden Führungsmittel (17', 17') verlaufende Längsachse in der Förderrichtung (12) des Kipp-Förderelementes (3) i.w. horizontal verläuft.

28. Kipp-Förderelement nach einem oder mehreren der Ansprüche 20 bis 27, **dadurch gekennzeichnet, daß** die die Führungsrollen (17') führenden Führungen (18) jeweils als Ausnehmungen der das Stützmittel (7) bildenden Segmente (7', 7') ausgebildet sind, deren zu den Stirnseiten der Segmente (7') i.w. parallel verlaufende Führungsfläche (25) Laufbahnen für die Führungsrollen (17', 17') bilden.

29. Kipp-Förderelement nach einem oder mehreren der Ansprüche 15 bis 28, **dadurch gekennzeichnet, daß** der Hebel-Schwenkwinkel (α), um welchen die Hebel (16', 16") nach Einleitung eines Kippvorgangs aus ihrer nicht geschwenkten Förderstellung um die zweite Schwenkachse (15) zu verschwenken sind, bei einem maximalen Stützmittel-Kippwinkel (β) von ca. 35° ca. 90° beträgt.

30. Kipp-Förderelement nach einem oder mehreren der Ansprüche 15 bis 29, **dadurch gekennzeichnet, daß** die Führung (18) für die Führungsmittel (17) der Hebel (16', 16") so ausgebildet ist, daß der Freilaufbetrieb, bei dem sich die Hebel (16', 16") um die zweite Schwenkachse drehen, ohne dabei das Stützmittel (7) um die Kippachse (13) zu verschwenken, bei einem Hebel-Schwenkwinkel (α) von ca. 15° endet.

## Claims

1. Method for selective individual or group tipping of the tipping shells (4) of a tipping shell sorter (1) at a destination point (2), whose tipping conveyor elements (3) each have a tipping shell (4) for holding a single item, an electric-motor tipping drive (9) with an electric motor (10) which can be fed with electrical power that can be transmitted without any contact being made, and a tipping device (11) which can be driven by this, by means of which the tipping shell (4) can be tipped to the side to an output position from its feed position with an essentially horizontal supporting surface (8) after the triggering of a corresponding control signal, **characterized in that** the electric motor (10) of a tipping conveyor element (3) is first of all brought on no load, essentially without any load, essentially to its rated rotation speed in each case before the initiation of a tipping movement of its tipping shell (4).

2. Method according to Claim 1, **characterized in that** the tipping movement of the tipping shell (4) of a tipping conveyor element (3) is in each case controlled such that the maximum electrical power which is available to the electric motor (10) during the tipping process is at no time exceeded by the power demand.

3. Method according to Claim 2, **characterized in that** the tipping movement is in each case controlled such that a power is in each case demanded which is essentially equal to the respective maximum power available to the electric motor (10) which has already been accelerated on no load at least essentially to its rated rotation speed, during and after the initiation of the tipping process, by appropriate acceleration of the relevant tipping shell (4) together with the single-item load.

4. Method according to one or more of the preceding claims, **characterized in that**, a tipping shell (4) which is to be tipped is essentially permanently accelerated after initiation of the tipping process until it has reached its final tipped position.

5. Method according to one or more of the preceding claims, **characterized in that** a tipping shell (4) which is to be tipped is braked shortly before reaching its final tipped position.

6. Method according to Claim 5, **characterized in that** a tipping shell (4) which is to be tipped is electrically braked in the final tipping phase.

7. Method according to one or more of Claims 4 to 6, **characterized in that** a tipping shell (4) which is to be tipped is accelerated essentially at a constant rate until it reaches its final tipped position after initiation of the tipping process.

8. Tipping conveyor element (3) for a tipping shell sorter (1) for specific in general individual outputting of single items, which were previously held at a pick-up point, at one of a plurality of destination points (2), having a large number of tipping conveyor elements (3) which are connected in a hinged manner to one another and can be moved by being driven along a guide (5), which is in general closed per se, is horizontal and has conveyor sections which may be inclined and/or vertical, in which case the tipping feed element (3) has a supporting means (7) for supporting a single item part, which supporting means can be tipped to the side relative to a lower part (6) which cannot be tipped, with a supporting surface (8) which is formed by a tipping shell (4) and is essentially horizontal in its aligned conveying position, and in which the supporting means (7) can be tipped about a tipping axis (13), which in each case runs in the conveying direction (12) of the tipping conveyor element (3), to one side or the other of the conveyor path to an inclined output position, in order to output the single item which was picked up at a pick-up point at the destination point (2) after receiving a tipping control signal from a sorter control device by means of an electric tipping drive (9) with an electric motor (10), which in particular is in the form of a DC motor and can be fed with electrical power without any contact being made, and by means of a tipping device (11), at the respectively intended destination point (2), **characterized in that** the tipping device (11) has an associated control device which results in the electric motor (10) first of all being accelerated essentially without any load, on no load, essentially up to its rated rotation speed after receiving a tipping control signal, without the tipping device (11) actually being operated during this process, and **in that** the device (11) is operated automatically by the control device as soon as the electric motor (10) has reached its rated rotation speed.

9. Tipping conveyor element according to Claim 8, **characterized in that** the tipping conveyor element is controlled by means of the control device such that the maximum electrical power which is available to its electric motor (10) during the tipping process is at no time exceeded by its power demand.

10. Tipping conveyor element according to Claim 9, **characterized in that** the tipping movement of its supporting means (7) is controlled such that a power is demanded which is essentially equal to the maximum power available to the electric motor (10), which has already been accelerated on no load at least essentially to its rated rotation speed, during and after the initiation of the tipping process, by appropriate acceleration of the tipping shell (4), which is connected to the supporting means, together with its single-item load.

11. Tipping conveyor element according to Claim 10, **characterized in that**, its supporting means (7), which is connected to the tipping shell (4), is essentially permanently accelerated after initiation of the tipping process until it has reached its final tipped position.

12. Tipping conveyor element according to one or more of Claims 8 to 11, **characterized by** a braking device, by means of which its supporting means (7) can be braked with the tipping shell (4) attached to it as well as the single-item load located on it, shortly before reaching the final tipped position.

13. Tipping conveyor element according to Claim 11 or 12, **characterized in that** its supporting means (7) can be accelerated essentially at a constant rate until it reaches its final tipped position during tipping, after receiving a tipping control signal and after initiation of the tipping process.

14. Tipping conveyor element according to one or more of Claims 8 to 13, **characterized in that** the tipping device (11) or in particular the control device which is associated with it has a freewheeling device which - once the tipping conveyor element (3) has received a tipping signal - acts on the rated rotation speed of the electric motor (10) during its acceleration, **in that** the supporting means (7) first of all remains in its aligned conveying position; and **in that** the tipping and/or control device are/is designed such that the supporting means (7) is automatically tipped to an inclined tipped position when the electric motor (10) has reached its rated rotation speed.

15. Tipping conveyor element according to Claim 14, **characterized in that** the supporting means (7) has a bearing (14), by means of which it is mounted such that it can pivot to a limited extent on the tipping shaft (13); **in that** a locking means is provided, by means of which the supporting means (7) can be detachably mechanically locked in its conveying position; **in that** the tipping and/or control device and/or its freewheeling device has a lever arrangement (16), which can pivot to a limited extent about a second pivoting shaft (15), which is parallel to a tipping shaft (13), with the lever arrangement (16) having a guide means (17) which is guided in a guide (18) (which is provided underneath the supporting surface (8)) of the supporting means (7); and **in that** the electric motor (10) is connected to the lever arrangement (16) via a transmission (19), with the guide (18) being designed in the form of a circular arc about the second pivoting shaft (15) in a first guide section (18'), such that any rotation of the output drive shaft of the electric motor (10) - and thus of the lever arrangement (16) - during the circular movement of the guide means (17) on the first guide section (18'), which is in the form of a circular arc, about the second pivoting shaft (15) initially does not result in any tipping movement of the supporting means (7) and of the single-item part which is supported by it about the second pivoting shaft (15) or the tipping shaft (13); and in which a second guide section (18"), which is adjacent to the first guide section (18'), no longer runs in the form of a circular arc with respect to the second pivoting shaft (15), but in such a manner that, on further rotation of the electric motor (10) which in the meantime has been accelerated essentially to its rated rotation speed, the lever arrangement (16) exerts a force or a torque on the supporting means (7), which force or torque initiates and carries out tipping of the supporting means (7) about the tipping axis (13).

16. Tipping conveyor element according to Claim 15, **characterized in that** the lever arrangement (16) has two levers (16', 16") arranged at a distance from one another.

17. Tipping conveyor element according to Claim 16, **characterized in that** the levers (16', 16") are essentially in the form of discs.

18. Tipping conveyor element according to Claim 16 or 17, **characterized in that** the levers (16', 16") are each provided with a tooth system on their end face, which in each case interacts with a spur gear wheel (21, 21'), with the spur gear wheels (21, 21') forming the transmission (19) or a part of the transmission of the electrical drive (9).

19. Tipping conveyor element according to Claim 18, **characterized in that** a self-locking device such as/in particular a worm transmission (22), is associated with or arranged upstream of the spur gear wheels (21, 21').

20. Tipping conveyor element according to one or more of Claims 15 to 19, **characterized in that** the guide means (17) is formed from guide rollers (17'), which are each arranged on one end section of a lever (16' or 16"), respectively.

21. Tipping conveyor element according to Claim 20, **characterized in that** each lever (16', 16") is provided with a guide roller (7') on its two end sections.

22. Tipping conveyor element according to one or more of Claims 8 to 21, **characterized in that** the supporting means (7) comprises two segments (7'), which are essentially in the form of discs and are arranged at a horizontal distance from one another, and are arranged on the tipping shaft (13) such that their longitudinal centre axis (23) runs essentially vertically in the conveying position of the tipping conveyor element (3).

23. Tipping conveyor element according to Claim 22, **characterized in that** the segments (7') of the supporting means (7) which are in the form of discs are essentially mirror-image symmetrical, with their longitudinal centre axis (23) lying on the plane of symmetry.

24. Tipping conveyor element according to one or more of Claims 15 to 23, **characterized in that** the second pivoting shaft (15) is arranged above the tipping shaft (13).

25. Tipping conveyor element according to Claim 24, **characterized in that** the second pivoting shaft (15) is arranged at right angles above the tipping shaft (13).

26. Tipping conveyor element according to one or more of Claims 16 to 25, **characterized in that** the levers (16, 16") are each designed to be essentially mirror-image symmetrical with respect to a centre axis which runs through the second pivoting shaft (15).

27. Tipping conveyor element according to one or more of Claims 16 to 26, **characterized in that** the two levers (16', 16") are arranged such that their respective longitudinal axis, which runs through their two guide means (17', 17'), runs essentially horizontally in the conveying direction (12) of the tipping conveyor element (3).

28. Tipping conveyor element according to one or more of Claims 20 to 27, **characterized in that** the guides (16) which guide the guide rollers (17') are each in the form of recesses in the segments (7', 7') which form the supporting means (7), whose guide surface (25), which runs essentially parallel to the end faces of the segments (7'), form raceways for the guide rolls (17', 17').

29. Tipping conveyor element according to one or more of Claims 15 to 28, **characterized in that** the lever pivoting angle (α) through which the levers (16', 16") can be pivoted after initiation of a tipping process from their non-pivoted conveying position about the second pivoting shaft (15), is from about 35° to about 90° at a maximum supporting means tipping angle (β).

30. Tipping conveyor element according to one or more of Claims 15 to 29, **characterized in that** the guide (18) for the guide means (17) of the levers (16', 16") is designed such that the freewheeling mode, in which the levers (16', 16") rotate about the second pivoting shaft, ends at a lever pivoting angle (α) of about 15°, without the supporting means (7) having to be pivoted about the tipping shaft (13) in this case.

## Revendications

1. Procédé pour faire basculer au choix, individuellement ou par groupes, des plateaux basculants (4) d'un trieur à plateaux basculants (1) en un emplacement cible (2), dont les éléments de transport basculants (3) présentent chacun un plateau basculant (4) devant recevoir une partie de produit en morceau, un entraînement basculant (9) par moteur électrique, avec un moteur électrique (10) à alimenter en énergie électrique pouvant être transmise sans contact, et présentent un dispositif de basculement (11) pouvant être entraîné par ce moteur électrique, à l'aide duquel le plateau basculant (4), après déclenchement d'un signal de commande correspondant, est basculé de sa position de transport, à laquelle la surface d'appui (8) est sensiblement horizontale, en une position de délivrance, **caractérisé en ce que** le moteur électrique (10) d'un élément de transport basculant (3) est chaque fois amené sensiblement à sa vitesse de rotation nominale, avant induction d'un mouvement de basculement de son plateau basculant (4), d'abord en marche à vide, sensiblement sans charge.

2. Procédé selon la revendication 1, **caractérisé en ce que** le mouvement de basculement du plateau basculant (4) d'un élément de transport basculant (3) est chaque fois commandé de manière que la puissance électrique maximale, disponible pour le moteur électrique (10), ne soit dépassée à aucun moment par le besoin de puissance, pendant le processus de basculement.

3. Procédé selon la revendication 2, **caractérisé en ce que** le mouvement de basculement est chaque fois commandé de manière que l'on demande au moteur électrique (10), dont on a sensiblement augmenté la vitesse de rotation, pour l'amener au moins sensiblement à sa vitesse nominale alors qu'il marchait préalablement à vide, avant et après l'induction du processus de basculement, au moyen d'une accélération correspondante du plateau basculant (4) concerné, outre la charge produite en morceaux, chaque fois une puissance qui est sensiblement égale à l'offre de puissance maximale spécifique.

4. Procédé selon l'une ou plusieurs des revendications précédentes, **caractérisé en ce qu'**un plateau basculant (4) à faire basculer, à partir de l'induction du processus de basculement est soumis à une accélération permanente, sensiblement aussi longtemps qu'il le faut pour qu'il ait atteint sa position basculée finale.

5. Procédé selon l'une ou plusieurs des revendications précédentes, **caractérisé en ce qu'**un plateau basculant (4) à faire basculer est freiné peu avant l'atteinte de sa position finale de basculement.

6. Procédé selon la revendication 5, **caractérisé en ce qu'**un plateau basculant (4) à faire basculer est freiné électriquement dans la phase finale du basculement.

7. Procédé selon l'une ou plusieurs des revendications 4 à 6, **caractérisé en ce qu'**un plateau basculant (4) à faire basculer est accéléré de façon sensiblement constante, après induction du processus de basculement, ou à l'atteinte de sa position finale de basculement.

8. Elément de transport basculant (3) pour un trieur à plateaux basculants (1), pour la délivrance ciblée, en général individuelle, de parties de produits en morceaux reçues précédemment en un point d'alimentation, à l'un de plusieurs emplacements cibles (2), avec une pluralité d'éléments de transport basculants (3), reliés ensemble de façon articulée, déplaçables de façon à pouvoir être entraînés le long d'un guidage (5) en général fermé en soi, présentant des tronçons de transport horizontaux, le cas échéant obliques et/ou verticaux, sachant que l'élément de transport basculant (3), pour l'appui d'une partie de produits en morceaux, présente un moyen de soutien (7), basculant latéralement par rapport à une partie inférieure (6) non basculante, avec une face d'appui (8) formée par un plateau basculant (4), qui est sensiblement horizontale lorsqu'elle est à sa position de transport alignée, et le moyen de soutien, après avoir reçu un signal de commande pour basculement, doit être basculé par un dispositif de commande de trieur, au moyen d'un entraînement basculant (9) à moteur électrique comprenant un moteur électrique (10) réalisé en particulier sous forme de moteur à courant continu, à alimenter sans contact en énergie électrique, ainsi qu'au moyen d'un dispositif de basculement (11), à l'emplacement cible (2) chaque fois prédéterminé, le basculement se faisant autour d'un axe de basculement (13), s'étendant chaque fois dans la direction de transport (12), de l'élément de transport basculant (3), vers l'un et/ou l'autre côté de la trajectoire de transport, pour prendre une position de délivrance oblique, afin de délivrer à l'emplacement cible (2) la partie de produits en morceaux reçue à un point d'alimentation, **caractérisé en ce qu'**au dispositif de basculement (11) est associé un dispositif de commande, faisant que le moteur électrique (10), après avoir reçu un signal de commande de basculement, subit une augmentation de sa vitesse de rotation qui, d'abord, est sensiblement sans charge, en marche à vide, pour monter sensiblement jusqu'à sa vitesse de rotation nominale, sans alors actionner déjà le dispositif de basculement (11), et **en ce que** le dispositif de basculement (11) est actionné automatiquement par le dispositif de commande, dès que le moteur électrique (10) a atteint sa vitesse de rotation nominale.

9. Elément de transport basculant selon la revendication 8, **caractérisé en ce qu'**il est commandé au moyen du dispositif de commande, de manière que la puissance électrique, maximale disponible pour son moteur électrique (10) pendant son processus de basculement, ne soit dépassée à aucun moment par son besoin en puissance.

10. Elément de transport basculant selon la revendication 9, **caractérisé en ce que** le mouvement de basculement de son moyen de soutien (7) est commandé de manière que, au moteur électrique (10), qui préalablement tournait en marche à vide et qui a été accéléré au moins sensiblement à sa vitesse de rotation nominale, pendant et après l'induction du processus de basculement, par une accélération correspondante du plateau basculant (4) relié au moyen de soutien, outre sa charge en produits en morceaux, est demandée une puissance qui est sensiblement identique à l'offre de puissance maximale.

11. Elément de transport basculant selon la revendication 10, **caractérisé en ce que** son moyen de soutien (7) relié au plateau basculant (4), à partir de l'induction du processus de basculement, est accéléré de façon permanente, sensiblement aussi longtemps qu'il faut pour qu'il atteigne sa position finale de basculement.

12. Elément de transport basculant selon l'une ou plusieurs des revendications 8 à 11, **caractérisé par** un dispositif de freinage, au moyen duquel son moyen de soutien (7), avec le plateau basculant (4) fixé sur lui, ainsi que la charge en produits en morceaux se trouvant sur celui-ci, est freiné, peu avant l'atteinte de la position finale de basculement.

13. Elément de transport basculant selon la revendication 11 ou 12, **caractérisé en ce que** son moyen de soutien (7), lors du basculement, après réception d'un signal de commande de basculement, ou après induction du processus de basculement, est à accélérer de façon sensiblement constante, jusqu'à l'atteinte de sa position finale de basculement.

14. Elément de transport basculant selon l'une ou plusieurs des revendications 8 à 13, **caractérisé en ce que** le dispositif de basculement (11), respectivement le dispositif de commande lui étant associé, présente un dispositif de roue libre qui - après que l'élément de transport basculant (3) ait reçu un signal de basculement - provoque une montée en vitesse du moteur électrique (10) jusqu'à sa vitesse de rotation nominale, **en ce que** le moyen de soutien (7) reste d'abord à sa position de transport alignée, et **en ce que** le dispositif de basculement et/ou de commande est/sont réalisée(s) de manière que le moyen de soutien (7) soit automatiquement basculé en une position de basculement oblique, lorsque le moteur électrique (10) a atteint sa vitesse de rotation nominale.

15. Elément de transport basculant selon la revendication 14, **caractérisé en ce que** le moyen de soutien (7) présente un palier (14), au moyen duquel il est monté à pivotement de façon limitée sur l'axe de basculement (13) ; **en ce qu'**un moyen de verrouillage est prévu, au moyen duquel l'élément de soutien (7) doit être verrouillé mécaniquement de façon désolidarisable à sa position de transport ; **en ce que** le dispositif de basculement et/ou de commande, ou bien son dispositif de roue libre, présente un dispositif à levier (16), susceptible de pivoter de façon limitée autour d'un deuxième axe de pivotement (15) parallèle à un axe de basculement (13), le dispositif à levier présentant un moyen de guidage (17) guidé dans un guidage (18), prévu au-dessous de la face d'appui (8), du moyen de soutien (7) ; et **en ce que** le moteur électrique (10) est relié par une transmission au dispositif à levier (16), le guidage (18) étant réalisé en un premier tronçon de guidage (18') en ayant une forme en arc de cercle autour du deuxième axe de pivotement (15), de manière qu'une rotation de l'axe mené du moteur d'entraînement (10) - et, ainsi, du dispositif à levier (16) - pendant le mouvement circulaire du moyen de guidage (17), sur le premier tronçon de guidage (18") en forme d'arc de cercle, autour du deuxième axe de pivotement (15), ne provoque d'abord aucun mouvement de basculement du moyen de soutien (7) et de la partie de produits en morceaux soutenue par celui-ci autour du deuxième axe de pivotement (15) ou de l'axe de basculement (13) ; et où un deuxième tronçon de guidage (18"), se raccordant au premier tronçon de guidage (18'), s'étend d'une façon qui n'est plus en arc de cercle par rapport au deuxième axe de pivotement (15), mais au contraire de manière que, lors de la continuation de la rotation du moteur électrique (10), qui, dans l'intervalle a été accéléré pour atteindre sensiblement sa vitesse de rotation nominale par le dispositif à levier (16), soit exercée sur le moyen de soutien (7) une force ou un couple de rotation, induisant et provoquant un basculement du moyen de soutien (7) autour de l'axe de basculement (13).

16. Elément de transport basculant selon la revendication 15, **caractérisé en ce que** le dispositif à levier (16) présente deux leviers (16', 16") disposés à distance mutuelle.

17. Elément de transport basculant selon la revendication 16, **caractérisé en ce que** les leviers (16', 16") sont réalisés de façon sensiblement discoïde.

18. Elément de transport basculant selon la revendication 16 ou 17, **caractérisé en ce que** les leviers (16', 16") sont chacun munis, sur leur face frontale, d'une denture coopérant chacune avec une roue dentée à denture droite (21, 21'), les roues dentées à denture droite (21, 21') formant la transmission (19), ou une partie de la transmission de l'entraînement électrique (9).

19. Elément de transport basculant selon la revendication 18, **caractérisé en ce que**, aux roues dentées à dentures droites (21, 21'), est associé ou adjoint en amont un dispositif autobloquant, tel que, par exemple, en particulier, une transmission à vis (22).

20. Elément de transport basculant selon l'une ou plusieurs des revendications 15 à 19, **caractérisé en ce que** le moyen de guidage (17) est formé de rouleaux de guidage (17'), chacun disposé sur un tronçon d'extrémité d'un levier (16' ou 16").

21. Elément de transport basculant selon la revendication 20, **caractérisé en ce que** chaque levier (16', 16") est muni d'un rouleau de guidage (7') sur ses deux tronçons d'extrémité.

22. Elément de transport basculant selon l'une ou plusieurs des revendications 8 à 21, **caractérisé en ce que** le moyen de soutien (7) est formé de deux segments (7') sensiblement discoïdes, disposés avec un espacement horizontal mutuel et agencés sur l'axe de basculement (13), de manière que leur axe médian longitudinal (23) s'étende sensiblement verticalement, lorsque l'élément de transport basculant (3) est à la position de transport.

23. Elément de transport basculant selon la revendication 22, **caractérisé en ce que** les segments (7') à forme discoïde du moyen de soutien (7) sont conformés en répondant sensiblement à une symétrie spéculaire, leur axe médian longitudinal (23) étant situé dans le plan de symétrie.

24. Elément de transport basculant selon l'une ou plusieurs des revendications 15 à 23, **caractérisé en ce que** le deuxième axe de pivotement (15) est disposé au-dessus de l'axe de basculement (13).

25. Elément de transport basculant selon la revendication 24, **caractérisé en ce que** le deuxième axe de pivotement (15) est disposé verticalement au-dessus de l'axe de basculement (13).

26. Elément de transport basculant selon l'une ou plusieurs des revendications 16 à 25, **caractérisé en ce que** les leviers (16' ou 16") sont conformés chacun de façon à répondre sensiblement à une symétrie spéculaire, par rapport à un axe médian passant par le deuxième axe de pivotement (15).

27. Elément de transport basculant selon l'une ou plusieurs des revendications 16 à 26, **caractérisé en ce que** les deux leviers (16', 16") sont disposés de manière que leur axe longitudinal, s'étendant chaque fois par les deux moyens de guidage (17', 17'), s'étende dans la direction de transport (12) de l'élément de transport basculant (3), de façon sensiblement horizontale.

28. Elément de transport basculant selon l'une ou plusieurs des revendications 20 à 27, **caractérisé en ce que** le guidage (18) guidant les rouleaux de guidage (17') sont chacun réalisés sous forme d'évidements des segments (7', 7') formant le moyen de soutien (7), dont les faces de guidage (25), s'étendant sensiblement parallèlement aux faces frontales des segments (7'), forment des pistes de roulement pour les rouleaux de guidage (17', 17').

29. Elément de transport basculant selon l'une ou plusieurs des revendications 15 à 28, **caractérisé en ce que** l'angle de pivotement de levier (α), de la valeur duquel les leviers (16', 16") pivotent autour du deuxième axe de pivotement (15), après induction d'un processus de basculement, depuis leur position de transport non pivotée, lorsque l'angle de basculement (β) du moyen de soutien est maximal, est d'une valeur d'environ 35° à environ 90°.

30. Elément de transport basculant selon l'une ou plusieurs des revendications 15 à 29, **caractérisé en ce que** le guidage (18) des moyens de guidage (17) des leviers (16', 16") est réalisé de manière que le fonctionnement en roue libre, lors duquel les leviers (16', 16") tournent autour du deuxième axe de pivotement, sans qu'alors le moyen de soutien (7) pivote autour de l'axe de basculement (13), s'achève pour un angle de pivotement de levier (α) d'environ 15°.
